# EUROPÄISCHE PATENTSCHRIFT

(11) **EP 0 584 818 B1**
(45) Veröffentlichungstag und Bekanntmachung des Hinweises auf die Patenterteilung: **02.12.1998**
(21) Anmeldenummer: 93113619.6
(22) Anmeldetag: 26.08.1993
(51) Int. Cl.: C08G 18/08, C08G 18/83, C09D 175/06

(54) **Wässrige Überzugsmittel enthaltend eine Polyurethanharzdispersion und Verfahren zu deren Herstellung und deren Verwendung**
Aqueous coating compositions comprising a dispersion of a polyurethane resin, process for their preparation and their use
Revêtements aqueux comprenant une dispersion de polyuréthane aqueuse, procédé pour leur préparation et leur utilisation

(30) Priorität: 27.08.1992 DE 4228510
(43) Veröffentlichungstag der Anmeldung: 02.03.1994
(73) Patentinhaber: Herberts Gesellschaft mit beschränkter Haftung, 42285 Wuppertal (DE)
(72) Erfinder: Vogt-Birnbrich, Bettina, Dr., D-42719 Solingen (DE); Patzschke, Hans-Peter, Dr., D-42297 Wuppertal (DE); Lenhard, Werner, Dr., D-42289 Wuppertal (DE); Schubert, Walter, Dr., D-42349 Wuppertal (DE)
(74) Vertreter: Türk, Gille, Hrabal

(56) Entgegenhaltungen:
- EP-A- 0 133 223
- EP-A- 0 135 909
- EP-A- 0 442 652
- EP-A- 0 498 156
- GB-A- 2 097 414
- DATABASE WPI Week 9127, Derwent Publications Ltd., London, GB; AN 198594 'TWO-LIQUID TYPE URETHANE PAINT COMPOSITION' & JP-A-03 124 778 (ORIGIN ELECTRIC) 9. Oktober 1989

## Beschreibung

Die Erfindung betrifft wäßrige Überzugsmittel, Verfahren zur Herstellung von dafür geeigneten Polyurethanharzdispersionen, sowie die Verwendung der Überzugsmittel bei der Herstellung von Mehrschichtlackierungen.

Insbesondere bei der Automobillackierung, aber auch in anderen Bereichen, in denen man Überzüge mit guter dekorativer Wirkung und gleichzeitig einen guten Korrosionsschutz wünscht, ist es bekannt, Substrate mit mehreren, übereinander angeordneten Überzugsschichten zu versehen. Hierbei wird im allgemeinen zunächst eine Korrosionsschutzschicht oder eine haftungsverbessernde Schicht aufgetragen, dann eine Steinschlagschutzschicht, sowie ein farbiges Überzugsmittel aufgebracht, und anschließend wird eine transparente Deckschicht, d.h. in der Regel ein Klarlack, der keine oder nur transparente Pigment enthält, aufgetragen. In der farbigen Basisschicht werden häufig metallische Pigmente verwendet, die zu den sogenannten Metallic-Lackierungen führen.

In der industriellen Praxis wurden früher bei der Automobillackierung konventionelle Überzugsmittel verwendet, die einen hohen Anteil an organischen Lösungsmitteln enthalten. Aus wirtschaftlichen Gründen und zur Verringerung der Umweltbelastung ist man bemüht organische Lösungsmittel in Überzugslacken so weit wie möglich zu vermeiden.

Überzugsmittel, die als Lösungs- oder Dispergiermittel überwiegend Wasser und organische Lösungsmittel nur noch in geringen Mengen enthalten, sind bekannt. Ebenso ist der Einsatz von Polyurethandispersionen (PU-Dispersionen) in Basislacken bekannt. So werden in der EP-A-0 089 497 Metallic-Basislacke beschrieben, die wäßrige PU-Dispersionen enthalten. Diese Bindemittel enthalten ionische Gruppen im Molekül. Sie entstehen durch Synthese eines NCO-haltigen Prepolymeren, das in wäßriger Dispersion mit Diaminen kettenverlängert wird.

In der EP-A-0 044 460, der DE-A-30 27 198 oder der DE-A-39 15 459 werden PU-Dispersionen beschrieben, bei denen NCO-terminierte Prepolymere mit Wasser zu Polyurethanen kettenverlängert werden. Die entstehenden PU-Dispersionen werden zusammen mit anderen Bindemitteln in Basislacküberzugsmitteln eingesetzt. Bei der Darstellung der PU-Dispersionen über NCO-Prepolymere kann in der Regel nicht lösungsmittelfrei gearbeitet werden, da NCO-terminierte Prepolymere auch bei niedrigem Molekulargewicht ohne Lösungsmittelzusatz nur schwer handhabbar sind.

In der DE-A-39 03 804 und der DE-A-40 01 841 wird eine Kettenverlängerung von OH-terminierten oder aminofunktionellen Prepolymeren mit Polyisocyanaten beschrieben.

Bei der Herstellung der in den vorstehenden Veröffentlichungen beschriebenen PU-Dispersionen erfolgt die Kettenverlängerung von Prepolymeren ausschließlich über die Bildung von C-N oder C-O Bindungen. Eine Kettenverlängerung unter Bildung von C-C-Bindungen oder die Ausnutzung CH-acider Zentren ist bisher nicht beschrieben worden, ebenso wie die Verwendung solcher Dispersionen für die Herstellung wäßriger Beschichtungsmittel.

Bekannt sind aus der EP-A-0 367 051 wäßrige PU-Dispersionen, die einreagierte Carbonylgruppen tragen sowie Carboxylgruppen. Diese funktionalisierten Polyurethane werden aus wäßriger Dispersion aufgetragen. Im getrockneten Film findet eine Vernetzung über die Carbonylgruppen mit Polyhydraziden unter Ausbildung einer C-N-Bindung statt. Reaktionen an dem der Carbonylgruppe benachbarten C-Atom werden nicht beschrieben.

Die bekannten wäßrigen Überzugsmittel, die PU-Dispersionen enthalten, haben Nachteile in der Haftung zu den weiteren Schichten beim Aufbau von Mehrschichtlackierungen. Besonders treten Probleme in der Schwitzwasserbeständigkeit auf, d.h. bei einer Belastung unter erhöhter Temperatur und Luftfeuchtigkeit ist eine Enthaftung oder Blasenbildung zu beobachten.

Ein weiterer Nachteil derartiger Dispersionen ist ihr Gehalt an organischem Lösemittel. Der Lösemittelgehalt kann allenfalls durch einen zusätzlichen Destillationsschritt in der Dispersionsphase verringert werden.

Aufgabe der vorliegenden Erfindung ist die Bereitstellung lösemittelarmer wäßriger Überzugsmittel auf der Basis von Polyurethanharzen, die sich durch eine gute Zwischenschichthaftung bei Mehrschichtlackierungen auszeichnen und außerdem gute Metallic-Effekte ergeben.

Diese Aufgabe wird durch das einen Gegenstand der Erfindung bildende wäßrige selbsttrocknende oder fremdvernetzende Überzugsmittel gelöst, das enthält:
I) 40 bis 100 Gew.-%, bevorzugt 60 bis 100 Gew.-%, besonders bevorzugt 65 bis 100 Gew.% eines Filmbildners in der Form einer wäßrigen Dispersion von einem oder mehreren Polyurethanharzen mit einem Zahlenmittel der Molmasse (Mn) von 2500 bis 1000000, mit mindestens einer CH-aciden Gruppe pro Molekül und einer OH-Zahl von 0 bis 100 und einem Gehalt von 5 bis 200 mEqu pro 100 g Festharz an ionischen und/oder in ionische Gruppen überführbare Gruppen, ausgewählt aus Carboxyl-, Phosphorsäure-, Sulfonsäuregruppen, sowie primäre, sekundäre und tertiäre Aminogruppen, quartäre Ammonium-, Phosphonium- und/oder tertiäre Sulfoniumgruppen, wobei die CH-aciden Gruppen zur Kettenverlängerung ganz oder teilweise mit einer oder mehreren Verbindungen, die mit mindestens zwei CH-aciden Gruppen reagieren können, umgesetzt sein können und wobei die Dispersion des Polyurethanharzes erhältlich ist durch Umsetzung von:
   A) mindestens einem Hydroxylgruppen enthaltenden Polyurethanharz (Komponente A), das Harnstoffgruppierungen enthalten kann, mit mindestens einer ionischen Gruppe und/oder zur Ionenbildung befähigten Gruppe pro Molekül, ausgewählt aus obiger Gruppe, und einer OH-Zahl von 10 bis 150, in wasserfreiem Milieu, mit
   B) mindestens einer Verbindung (Komponente B), die mindestens eine zur Reaktion mit zumindest einem Teil der OH-Gruppen des Polyurethanharzes geeignete funktionelle Gruppe aufweist und darüber hinaus eine CH-acide Gruppe enthält, oder bei der Umsetzung mit der Komponente A) ergibt, und
   C) gänzliche oder teilweise Überführung von in dem erhaltenen Produkt vorhandenen, zur Ionenbildung befähigten Gruppen, in die ionisierte Form, und Überführung des erhaltenen Produktes in die wäßrige Phase, und
II) 60 bis 0 Gew.-%, bevorzugt 40 bis 0 Gew.-%, besonders bevorzugt 35 bis 0 Gew.-%, eines oder mehrerer Vernetzer auf der Basis von Verbindungen, die mit mindestens zwei CH-aciden Gruppen reagieren können, auf der Basis von Formaldehyd-Kondensationsharzen und/oder Polyisocyanaten mit freien oder blockierten Isocyanatgruppen
wobei die Verbindungen der Komponente I) und/oder II), die mit mindestens zwei CH-aciden Gruppen reagieren können, Aldehyde mit einer oder mehreren Aldehydfunktionen und/oder freie oder blockierte Polyisocyanate mit im Durchschnitt mindestens 1,5 Isocyanatfunktionen im Molekül sind, und
wobei sich die Gew.-% von I) und II) auf den Harzfestkörpergehalt beziehen und auf 100 Gew.-% addieren,
sowie Pigmente und gegebenenfalls Füllstoffe, organische Lösemittel und/oder lackübliche Additive.

Einen weiteren Gegenstand der Erfindung bildet ein wäßriges, selbsttrocknendes oder fremdvernetzendes Überzugsmittel, enthaltend
I) 40 bis 100 Gew.-% eines Filmbildners in der Form einer wäßrigen Dispersion von einem oder mehreren Polyurethanharzen mit einem Zahlenmittel der Molmasse (Mn) von 2500 bis 1000000, mit mindestens einer CH-aciden Gruppe pro Molekül und einer OH-Zahl von 0 bis 100 und einem Gehalt von 5 bis 200 mEqu pro 100 g Festharz an ionischen und/oder in ionische Gruppen überführbare Gruppen, ausgewählt aus Carboxyl-, Phosphorsäure-, Sulfonsäuregruppen, sowie primäre, sekundäre und tertiäre Aminogruppen, quartäre Ammonium-, Phosphonium- und/oder tertiäre Sulfoniumgruppen, wobei die CH-aciden Gruppen zur Kettenverlängerung ganz oder teilweise mit einer oder mehreren Verbindungen, die mit mindestens zwei CH-aciden Gruppen reagieren können, umgesetzt sind und
II) 60 bis 0 Gew.-% eines oder mehrerer Vernetzer auf der Basis von Verbindungen, die mit mindestens zwei CH-aciden Gruppen reagieren können, auf der Basis von Formaldehyd-Kondensationsharzen und/oder Polyisocyanaten mit freien oder blockierten Isocyanatgruppen
wobei die Verbindungen der Komponente I) und/oder II), die mit mindestens zwei CH-aciden Gruppen reagieren können, Aldehyde mit einer oder mehreren Aldehydfunktionen und/oder freie oder blockierte Polyisocyanate mit im Durchschnitt mindestens 1,5 Isocyanatfunktionen im Molekül sind, und
wobei sich die Gew.-% von I) und II) auf den Harzfestkörpergehalt beziehen und auf 100 Gew.-% addieren,
sowie Pigmente und gegebenenfalls Füllstoffe, organische Lösemittel und/oder lackübliche Additive.

In der Komponente I) sind 5 bis 200 mEqu (Milliequivalente) an ionischen Gruppen, und/oder in ionische Gruppen überführbare Gruppen pro 100 g Festharz vorhanden.

Sind die ionischen Gruppen anionisch, so liegen bevorzugt über 15 und unter 100, besonders bevorzugt über 20 und unter 60 mEqu/100 g Festharz vor.

Sind die ionischen Gruppen kationisch, so liegen bevorzugt über 30 und unter 150, besonders bevorzugt über 45 und unter 100 mEqu/100 g Festharz vor.

Beispiele für in der Komponente I) der erfindungsgemäßen Überzugsmittel enthaltene ionische und in ionische Gruppen überführbare Gruppen ergeben sich aus der folgenden Beschreibung, die die Herstellung der Komponente I) betrifft. Sie werden beispielsweise für die später definierte Komponente c) angegeben.

Beispiele für Gruppen, die mit mindestens zwei CH-aciden Gruppen reagieren können, ergeben sich ebenfalls aus der folgenden Beschreibung, beispielsweise bei der Definition der später definierten Komponente D), wie Mono- oder Polyaldehyde, wobei letztere mehrfunktionelle Aldehyde oder Kondensationsprodukte von Monoaldehyden sein können und/oder Polyisocyanate mit mindestens 1,5 Isocyanatfunktionen im Molekül. Die Polyisocyanate schließen Diisocyanate ein.

Die in der Komponente I) der erfindungsgemäßen Überzugsmittel eingesetzten Polyurethanharze, die mindestens eine CH-acide Gruppe enthalten, können auf verschiedene Weise hergestellt werden.

Beispielsweise ist es möglich, Polyurethanharze zu verwenden, deren Herstellung in der EP-A-0 367 051 beschrieben wird. Ihre Herstellung erfolgt durch Umsetzung von
- einem oder mehreren organischen Polyisocyanaten mit
- einer oder mehreren Verbindungen mit mehr als einer mit Isocyanat reaktiven Gruppe und mindestens einer ionischen Gruppe, zur Ionenbildung befähigten Gruppe und/oder hydrophilen Gruppe,
- einem oder mehreren Mono- oder Polyalkoholen, der mindestens eine CH-acide Gruppe enthält,
- gegebenenfalls einem oder mehreren Kettenverlängerern (z.B. polyfunktionelle Amine und/oder Polyole) und
- gegebenenfalls einer oder mehreren Polyhydroxylverbindungen.

Ein weiterer Weg zur Herstellung der Dispersion eines Polyurethanharzes (Komponente I), das mindestens eine CH-acide Gruppe enthält, verläuft durch Umsetzung von:
A) mindestens einem Hydroxylgruppen enthaltenden Polyurethanharz (Komponente A), das Harnstoffgruppierungen enthalten kann, mit mindestens einer ionischen Gruppe und/oder zur Ionenbildung befähigten Gruppe pro Molekül und einer OH-Zahl von 10 bis 150, bevorzugt über 15 und unter 100, in wasserfreiem Milieu, mit
B) mindestens einer Verbindung (Komponente B), die mindestens eine zur Reaktion mit zumindest einem Teil der OH-Gruppen des Polyurethanharzes geeignete funktionelle Gruppe aufweist und darüber hinaus eine CH-acide Gruppe enthält, oder bei der Umsetzung mit der Komponente A) ergibt, und
C) gänzliche oder teilweise Überführung von in dem erhaltenen Produkt vorhandenen, zur Ionenbildung befähigten Gruppen, in die ionisierte Form, und Überführen des erhaltenen Produkts in die wäßrige Phase.

Der Gehalt an CH-aciden Gruppen in einem derartige Gruppen enthaltenden Polyurethanharz der Komponente I) liegt bevorzugt bei 20 bis 450 mEqu, besonders bevorzugt über 40 und unter 300 mEqu, jeweils bezogen auf 100 g Festharz.

Diese Polyurethanharze mit mindestens einer CH-aciden Gruppe weisen Zahlenmittel der Molmasse von 2500 bis 1000000 auf.

Zum direkten Einsatz in wäßrigen Überzugsmitteln werden solche Polyurethanharze mit CH-aciden Gruppen verwendet, deren Zahlenmittel der Molmasse (Mn) bevorzugt bei 5000 bis 500000 liegt. Solche mit einem Zahlenmittel der Molmasse von beispielsweise über 5000 und unter 100000 sind hierzu besonders bevorzugt. Insbesondere bevorzugt sind solche mit einem Zahlenmittel der Molmasse über 5000 und unter 50000.

Insbesondere Polyurethanharze mit CH-aciden Gruppen, mit niedrigerem Zahlenmittel der Molmasse von beispielsweise 2500 bis 50000 werden bevorzugt einer Kettenverlängerung mit einer oder mehreren Verbindungen, die mit mindestens zwei CH-aciden Gruppen reagieren können, unterzogen unter Erhöhung der Molekulargewichte auf bevorzugt über 5000 und unter 100000.

Die Erfindung betrifft somit als einen weiteren Gegenstand das nachstehende Verfahren zur Herstellung der als Komponente I) verwendbaren wäßrigen Dispersion von Polyurethanharzen, mit einem Zahlenmittel der Molmasse (Mn) von 2500 bis 1000000, einer OH-Zahl von 0 bis 100 und einem Gehalt von 5 bis 200 mEqu pro 100 g Festharz an ionischen und/oder in ionische Gruppen überführbare Gruppen, ausgewählt aus Carboxyl-, Phosphorsäure-, Sulfonsäuregruppen, sowie primäre, sekundäre und tertiäre Aminogruppen, quartäre Ammonium-, Phosphonium- und/oder tertiäre Sulfoniumgruppen, das dadurch gekennzeichnet ist, daß man
- ein oder mehrere in Wasser dispergierbare Polyurethanharze mit ionischen und/oder in ionische Gruppen überführbare Gruppen, die mindestens eine CH-acide Gruppe pro Molekül enthalten und ein Zahlenmittel der Molmasse (Mn) von 2500 bis 500000 aufweisen,
- in wäßrigem oder nicht-wäßrigem Medium zur Kettenverlängerung mit
- einer oder mehreren Verbindungen, die mit mindestens zwei CH-aciden Gruppen reagieren können, wobei es sich um Mono- oder Polyaldehyde und/oder Di- und Polyisocyanate mit mindestens 1,5 Isocyanatfunktionen im Molekül handelt, umgesetzt und
- gegebenenfalls ein in nicht-wäßrigem Medium erhaltenes Reaktionsprodukt in die wäßrige Phase überführt wird.

Das als Ausgangsprodukt für die Herstellung der Komponente I) verwendbare, OH-Gruppen enthaltendes Polyurethanharz (Komponente A) kann hergestellt werden durch Umsetzung in wasserfreiem Milieu von
a) mindestens einer linearen oder verzweigten Verbindung, die mindestens zwei gegenüber Isocyanat reaktive Gruppe trägt mit einem mittleren Molekulargewicht von 60 - 10000, bevorzugt 60 - 6000,
b) mindestens einem organischen Polyisocyanat, insbesondere Diisocyanat,
c) mindestens einer Verbindung mit mehr als einer mit Isocyanat reaktive Gruppe, und mindestens einer ionischen Gruppe und/oder zur Ionenbildung befähigten Gruppe, mit einer zahlenmittleren Molmasse (Mn) bis zu 10000, bevorzugt bis zu 2000, mit einem OH/NCO-Verhältnis von über 1 bis 4 : 1.

Bevorzugt ist die vorstehend genannte lineare oder verzweigte Verbindung der Komponente a) mindestens ein Polyol auf der Basis eines oder mehrerer Polyether, Polyester und/oder Polycarbonate, mit mindestens zwei OH-Gruppen im Molekül und einem Zahlenmittel der Molmasse (Mn) von 600 - 10000, bevorzugt über 1000 und unter 5000, gegebenenfalls unter Mitverwendung von einem oder mehreren zumindest difunktionellen niedermolekularen Alkoholen und/oder Aminen mit einer Molmasse unter 600, bevorzugt unter 400.

Die Komponente A) kann jedoch auch auf folgende Weise hergestellt werden. Beispielsweise kann von einem Prepolymer mit endständigen NCO-Gruppen ausgegangen werden, das anschließend z.B. mit einem Aminopolyol oder niedermolekularen Polyalkohol umgesetzt wird.

Das Prepolymer erhält man durch Umsetzung eines oder mehrerer Polyisocyanate, wie z.B. für die Komponente b) angegeben, mit einer oder mehreren Verbindungen wie für die Komponente a) angegeben mit mindestens einer Verbindung wie für die Komponente c) angegeben.

Gegebenenfalls können ein oder mehrere mindestens difunktionelle niedermolekulare Alkohole und/oder Amine mit einer Molmasse unter 600 mitumgesetzt werden. Das NCO-Prepolymer wird dann unter weitere Reaktion mit einem primären oder sekundären Monoamin, das mindestens eine OH-Gruppe enthält, in ein hydroxyfunktionelles Polyurethan umgewandelt. Beispiele für verwendbare Monoamine sind Ethanolamin, N-Methylethanolamin, Diethanolamin, 3-Amino-1-propanol und 2-Amino-2-hydroxymethylpropan-1,3-diol.

Nach einer weiteren bevorzugten Methode wird das Prepolymer mit endständigem NCO wie vorstehend hergestellt. Statt jedoch die Isocyanatgruppen mit einem Monoamin zu verkappen, erfolgt eine Kettenverlängerung des Prepolymers mit endständigem NCO mit einem OH enthaltenden Polyamin, z.B. N-Hydroxyethyl-ethylendiamin. Bei Verwendung dieses Kettenverlängerungsmittels erhält man ein kettenverlängertes, hydroxyfunktionelles Polyurethan, das seitenständige OH-Gruppen aufweist.

Diese Arbeitsweise ist beispielsweise in der EP-A-0 469 389 beschrieben. Die in dieser Literaturstelle genannten Herstellungsverfahren für Polyurethandiole sind beispielsweise zur Bereitstellung der erfindungsgemäß eingesetzten Komponente A) brauchbar.

Alle Herstellungsverfahren für OH-Gruppen enthaltende Polyurethane können als Ein- oder Mehrstufenverfahren durchgeführt werden.

Das Hydroxylgruppen enthaltende Polyurethanharz der Komponente A) weist bevorzugt einen Gehalt von Urethan-(-NHCOO-) und gegebenenfalls Harnstoff-(-NHCONH-)Gruppen zwischen 10 und 300 Milliequivalenten pro 100 g Festharz auf.

Das durch Umsetzung der Komponenten A) und B) erhaltene Polyurethanharz weist über Esterfunktionen gebundene Reste mit CH-aciden Gruppen auf. Die folgende Formel stellt ein Beispiel für ein solches Harz dar. 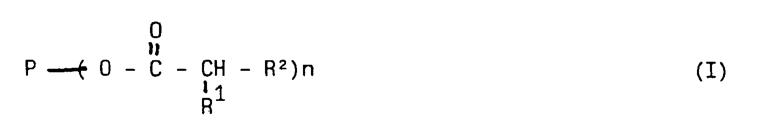 mit
- R¹: = H, C₁ - C₆-Alkyl, -COOR³
- R²: = -CN, -COOR³, -CONR³₂, 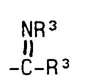
- R³: = H, linear oder verzweigt C₁ - C₈-Alkyl
- P: = Polyurethan/Polyharnstoffpolymer
- n: = 2 bis 5 (= Anzahl der am Gerüst P vorhandenen Esterfunktionen mit CH-aciden Gruppen).

Die Darstellung der wäßrigen Polyurethandispersion kann auf jeder Stufe ohne organische Lösungsmittel durchgeführt werden.

Die zur Herstellung des Ausgangsprodukt-Polyurethanharzes A) als Komponente a) eingesetzten Verbindungen können beispielsweise eine lineare oder verzweigte Polyolkomponente, z.B. Diole sein. Geht man von einer linearen Diolkomponente aus, können zum Erzielen einer Verzweigung des Polymeren Anteile an Polyolen mit einer Funktionalität > 3 zugesetzt werden. Dabei ist die Menge so zu wählen, daß keine Gelbildung bei der Synthese entsteht.

Beispiele für die Polyolkomponente a) können Polyetherpolyole der allgemeinen Formel II:

H (̵O - (CHR⁴)ₙ - )ₘ OH (II)

sein, in der R⁴ = Wasserstoff oder ein niedriger Alkylrest, gegebenenfalls mit verschiedenen Substituenten, ist, n = 2 bis 6 und m = 10 bis 50 oder noch höher ist, wobei die Reste R⁴ gleich oder verschieden sind.

Beispiele sind Poly(oxytetramethylen)glykole, Poly(oxyethylen)glykole und Poly(oxypropylen)glykole oder gemischte Blockcopolymere, die unterschiedliche Oxytetramethylen-, Oxyethylen- und/oder Oxypropyleneinheiten enthalten.

Vorzugsweise werden solche Polyetherpolyole mit einem Molekulargewicht im Bereich von 400 bis 3000 verwendet, die ohne Mitverwendung von Ethylenoxid, d.h. insbesondere unter ausschließlicher Verwendung von Propylenoxid oder Tetrahydrofuran erhalten werden. Die OH-Zahl beträgt bevorzugt zwischen 10 bis 150.

Als weitere Beispiele für die Polyolkomponente a) können Polyesterpolyole genannt werden. Man kann die Polyesterpolyole z.B. durch Versterung von organischen Dicarbonsäuren oder ihren Anhydriden mit organischen Polyolen herstellen. Die Dicarbonsuren und die Polyole können aliphatische oder aromatische Dicarbonsäuren und Polyole sein.

Die zur Herstellung der Polyester verwendeten niedrigmolekularen Polyole sind z.B. Diole wie Alkylenglykole, beispielsweise Ethylenglykol, Butylenglykol, Hexandiol, hydriertes Bisphenol A und 2,2-Butyl-ethyl-propandiol, Neopentylglykol und/oder andere Glykole wie Dimethylolcyclohexan. Es können aber auch höherfunktionelle oder Gemische aus höher- und monofunktionellen OH-Komponenten wie z.B. Trimethylolpropan, Pentaerythrit, Glycerin, Hexantiol; Polyether, die Kondensate von Glykolen mit Alkylenoxiden sind; Monoether solcher Glykole, wie Diethylenglykolmonoethylether, Tripropylenglykolmonomethylether, eingesetzt werden.

Die Säurekomponente des Polyesters besteht bevorzugt aus niedermolekularen Dicarbonsäuren oder ihren Anhydriden mit 2 bis 18 Kohlenstoffatomen im Molekül.

Geeignete Säuren sind beispielsweise Phthalsäure, Isophthalsäure, Terephthalsäure, Tetrahydrophthalsäure, Hexahydrophthalsäure, Adipinsäure, Azelainsäure, Sebazinsäure, Fumarsäure, Maleinsäure, Glutarsäure, Bernsteinsäure, Itaconsäure und/oder 1,4-Cyclohexandicarbonsäure. Anstelle dieser Säuren können auch ihre Methylester oder Anhydride, soweit diese existieren, verwendet werden. Es ist auch möglich, um verzweigte Polyester zu erhalten, Anteile an höherfunktionellen Carbonsäuren zuzusetzen, wie trifunktionelle Carbonsäuren, Trimellithsäure, Apfelsäure, Aconitsäure, Bishydroxyethyltaurin sowie Dimethylolpropionsäure, Dimethylolbuttersäure oder Bisanhydride. Polycarbonsäuren, die keine cyclischen Anhydride bilden, sind bevorzugt.

Die Polyester besitzen vorzugsweise ein Molekulargewicht von 300 bis 6000, eine OH-Zahl von 20 bis 400 und eine Säurezahl von kleiner 3, bevorzugt kleiner 1. Bevorzugt werden lineare Polyester eingesetzt.

Als Komponente a) können z.B. auch Polycarbonatdiole eingesetzt werden, wie sie beispielsweise in der EP-A-0 427 979 beschrieben werden. Dies sind Ester der Kohlensäure, die durch Reaktion von Kohlensäurederivaten, z.B. Diphenylcarbonat oder Phosgen, mit Diolen erhalten werden. Als derartige Diole kommen z.B. Ethylenglykol, Propandiol-1,2 und -1,3, Butandiol-1,4 und -1,3, Hexandiol-1,6, Octandiol-1,8, Neopentylglykol, 1,4-Bishydroxymethylcyclohexan, 2-Methyl-1,3-propandiol, 2,2,4-Trimethylpentandiol-1,3, ferner Diethylenglykol, Polypropylenglykol, Dibutylenglykol, Polybutylenglykole, Bisphenol A und/oder Tetrabrombisphenol in Frage.

Ferner lassen sich bei der Erfindung auch Polyesterpolyole, bevorzugt Diole, die sich von Lactonen ableiten, als Komponente a) benutzen. Diese Produkte erhält man beispielsweise durch die Umsetzung eines epsilon-Caprolactons mit einem Diol. Beispiele solcher Produkte sind in der US-A-3 169 945 beschrieben. Die Polylactonpolyole, die man durch diese Umsetzung erhält, zeichnen sich durch die Gegenwart einer endständigen Hydroxylgruppe und durch wiederkehrende Polyesteranteile, die sich von dem Lacton ableiten, aus. Diese wiederkehrenden Molekülanteile können der allgemeinen Formel 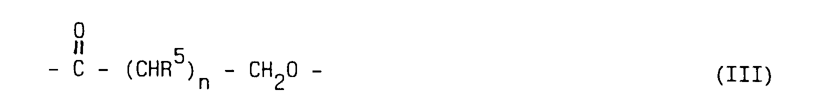 entsprechen, in der n bevorzugt 4 bis 6 ist und der Substituent R⁵ Wasserstoff, ein Alkylrest, ein Cycloalkylrest oder ein Alkoxyrest ist, wobei kein Substituent mehr als 12 Kohlenstoffatome enthält und die gesamte Anzahl der Kohlenstoffatome in den Substituenten des Lactonringes 12 nicht übersteigt.

Das als Ausgangsmaterial verwendete Lacton kann ein beliebiges Lacton oder eine beliebige Kombination von Lactonen sein, wobei dieses Lacton bevorzugt mindestens 6 Kohlenstoffatome in dem Ring enthält, z.B. 6 bis 8 Kohlenstoffatome und wobei mindestens 2 Wasserstoffsubstituenten an dem Kohlenstoffatom vorhanden sein sollten, das an die Sauerstoffgruppe des Rings gebunden ist. Das als Ausgangsmaterial verwendete Lacton kann durch die folgende allgemeine Formel IV dargestellt werden: 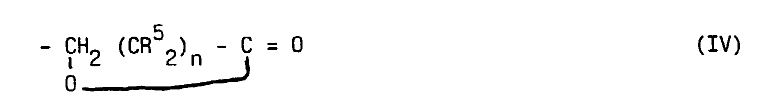 in der n und R⁵ die bereits angegebene Bedeutung haben.

Die bei der Erfindung für die Herstellung der Polyesterdiole bevorzugten Lactone sind die epsilon-Caprolactone, bei denen n den Wert 4 hat. Das am meisten bevorzugte Lacton ist das unsubstituierte epsilon-Caprolacton, bei dem n den Wert 4 hat und alle R⁵-Substituenten Wasserstoff sind. Dieses Lacton wird besonders bevorzugt, da es in großen Mengen zur Verfügung steht und die entstehenden Polylactondiole Überzüge mit ausgezeichneten Eigenschaften ergeben. Außerdem können verschiedene andere Lactone einzeln oder in Kombination benutzt werden.

Beispiele von für die Umsetzung mit dem Lacton geeignete aliphatischen Diolen schließen Ethylenglykol, 1,3-Propandiol, 1,4-Butandiol und/oder Diemthylolcyclohexan ein.

Bei der zur Herstellung des Ausgangsprodukt für die Komponente I) verwendbaren Polyurethanharze A) als Komponente a) einsetzbaren isocyanatreaktiven Verbindung kann es sich beispielsweise auch handeln um
- OH-Gruppen und/oder SH-Gruppen enthaltende Polythioether, wie Kondensationsprodukte von Thiodiglykol mit sich selbst und/oder mit anderen Glykolen, Dicarbonsäuren, Hydroxycrbonsäuren, Formaldehyd, Aminocarbonsäuren oder Aminoalkoholen. Es handelt sich bei den Produkten entweder um gemishte Polythiether, Polythioetherester oder um Polythioetheresteramide.
- OH-Gruppen enthaltende Polyacetale, z.B. aus den vorstehend genannten Polyolen, insbesondere Diethylenglykol, Triethylenglykol, 4,4'-Dioxyethoxy-diphenyldimethylen, 1,6-Hexandiol und Formaldehyd. Geeignete Polyacetale können auch durch Polymerisation cyclischer Acetale erhalten werden.
- Polyetherester, die mit Isocyanat reaktive Gruppen enthalten.
- OH-Gruppen enthaltende Polyesteramide und Polyamide, einschließlich bevorzugt linearer Kondensate aus mehrwertigen gesättigten und ungesättigten Carbonsäuren oder ihren Anhydriden und mehrwertigen, gesättigten und ungesättigten Aminoalkoholen, Diaminen, Polyaminen oder Gemischen davon.
- Dihydroxypolyestercarbonate.
- Polyurethandiole, die beispielsweise entweder aus entsprechenden Carbonaten und Diaminen, oder aus, wie üblich, entsprechenden Polyolen und polyisocyanaten hergestellt werden können.
- Poly(meth)acrylatpolyole, insbesondere Poly(meth)acrylatdiole.
- Polybutadienöl-Diole.

Diese Verbindungstypen können allein oder im Gemisch von zwei oder mehreren davon eingesetzt werden. Es können auch Verbindungen eingesetzt werden, die mehreren derartigen Typen entsprechen (intramolekulare Gemische).

Bei den in a) gegebenenfalls mitverwendbaren niedermolekularen Verbindungen handelt es sich besonders um Alkohole und Amine. Es sind die aus der Polyurethanchemie an sich bekannten im Sinne einer Isocyanat-Additionsreaktion mindestens difunktionellen Hydroxyl- und/oder Aminogruppen aufweisenden Verbindungen eines unter 600, bevorzugt unter 300 liegenden Molekulargewichts. Als Verbindung kommen sowohl im Sinne der Isocyanatadditionsreaktion difunktionelle Verbindungen als auch mindestens trifunktionelle Verbindungen bzw. beliebige Gemische derartiger Verbindungen in Betracht.

Beispiele für solche Komponenten sind niedermolekulare mehrwertige Alkohole wie Ethylenglykol, Propandiol-1,2 und -1,3, Butandiol-1,4 und -1,3, Hexandiol-1,6, Octandiol-1,8, Neopentylglykol, 1,4-Bishydroxymethylcyclohexan, 2-Methyl-1,3-propandiol, 2,2,4-Trimethylpentandiol-1,3, Glycerin, Trimethylolpropan, Trimethylolethan, isomere Hexantriole oder Pentaerythrit; niedermolekulare Amine wie z.B. Ethylendiamin, 1,2- und 1,3-Diaminopropan, 1,3-, 1,4-, 1,6-Diaminohexan, 1,3-Diamino-2,2-Dimethylpropan, Isophorondiamin, 4,4'-Diaminodicyclohexylmethan, 1,4-bis-(2-amino-propyl)-cyclohexan, oder auch Hydrazin, Hydrazide bzw. beliebige Gemische derartiger Amine oder Hydrazine; höherfunktionelle Polyamine wie Diethylentriamin, Triethylentriamin, Dipropylentriamin, Tripropylentetramin, cycloaliphatische Diamine oder Anlagerungsverbindungen von Acrylnitril an Diamine, wie z.B. Hexamethylenpropylentriamin, Tetramethylenpropylentriamin, Isophoronpropylentriamin, 1,4- oder 1,3-Cyclohexanpropylentriamin oder beliebige Gemische derartiger Polyamine, und die hydrierten Derivate derartiger Anlagerungsverbindungen.

Als Komponente b) können für die Herstellung der Polyurethandispersion beliebige organische Polyisocyanate, wie z.B. Diisocyanate eingesetzt werden. Es können aliphatische oder aromatische, auch sterisch gehinderte Isocyanate eingesetzt werden. Beispiele von geeigneten Diisocyanaten sind Trimethylendiisocyanat, Tetramethylendiisocyanat, Pentamethylendiisocyanat, Hexamethylendiisocyanat, Propylendiisocyanat, Ethylendiisocyanat, 2,3-Dimethylethylendiisocyanat, 1-Methyltrimethylendiisocyanat, 1,3-Cyclopentylendiisocyanat, 1,4-Cyclohexylendiisocyanat, 1,2-Cyclohexylendiisocyanat, 1,3-Phenylendiisocyanat, 1,4-Phenylendiisocyanat, 2,4-Toluylen-diisocyanat, 2,6-Toluylen-diisocyanat, 1-Isocyanatomethyl-5-isocyanato-1,3,3-trimethylcyclohexan, Bis-(4-isocyanatocyclohexyl)methan, Bis-(4-isocyanato-phenyl)-methan, 4,4-Diisocyanato-diphenylether, 1,5-Dibutylpentamethylendiisocyanat, Tetramethylxlylendiisocyanat, 2,3-Bis-(8-isocyantooctyl)-4-octyl-5-hexylcyclohexan, 3(4)-Isocyanatomethyl-1-methylcyclohexylisocyanat, und/oder 2,6-Diisocyanatomethyl-capronat.

Bevorzugt eingesetzt werden nicht vergilbende und/oder sterisch gehinderte Isocyanate mit 4 bis 25, vorzugsweise 6 - 16 C-Atomen, die in alpha-Stellung zur NCO-Gruppe eine oder zwei lineare, verzweigte oder cyclische Alkylgruppen mit 1 bis 12, bevorzugt 1 bis 4 C-Atomen enthalten. Das Grundgerüst kann aus einem aromatischen oder alicyclischen Ring oder aus einer aliphatischen linearen oder verzweigten C-Kette mit 1 bis 12 C-Atomen bestehen. Beispiele hierfür sind Isophorondiisocyanat, Bis-(4-isocyanatocyclohexyl)methan, 1,1,6,6-Tetramethyl-hexamethylendiisocyanat, 1,5-Dibutyl-pentamethylendiisocyanat, 3(4)-Isocyanatomethyl-1-methylcyclohexyl-isocyanat, p- und m-Tetramethylxylylendiisocyanat und/oder der entsprechenden hydrierten Homologen.

Gegebenenfalls können auch in geringen Anteilen höherfunktionelle Isocyanate wie z.B. Polyisocyanate vom Biuret- oder Isocyanurattyp, oder Produkte, die durch Umsetzung von einem Überschuß von Diisocyanat an Polyole erhalten werden, zugesetzt werden. Diese Arbeitsweise ist jedoch nicht bevorzugt.

Erfindungsgemäß werden als Komponente c) bevorzugt niedermolekulare Verbindungen verwendet, die mehr als eine, bevorzugt zwei oder mindestens zwei mit Isocyanatgruppen reagierende Gruppen und mindestens eine ionische Gruppe und/oder zur Ionenbildung befähigte Gruppe enthalten. Bevorzugt sind anionische oder anionenbildende Gruppen. Geeignete mit Isocyanatgruppen reagierende Gruppen sind insbesondere Hydroxylgruppen und primäre und sekundäre Aminogruppen. Als saure zur Ionenbildung befähigte Gruppen kommen Carboxyl-, Phosphorsäure- und Sulfonsäuregruppen in Betracht. Als basische in Kationen überführbare Gruppen kommen primäre, sekundäre und tertiäre Aminogruppen, quartäre Ammonium-, Phosphonium- und/oder tertiäre Sulfoniumgruppen in Betracht. Die erfindungsgemäß bevorzugt einzuführenden anionischen Gruppen sind Carboxylgruppen; sie können beispielsweise durch Verwendung von Hydroxyalkancarbonsäuren der folgenden allgemeinen Formel als Komponente c) eingeführt werden:

(HO)ₓQ(COOH)_{y}

worin
Q einen geraden oder verzweigten Kohlenwasserstoffrest mit 1 bis 12 C-Atomen darstellt und
x und y jeweils 1 bis 3 bedeuten. Beispiele hierfür sind Zitronensäure und Weinsäure. Bevorzugt sind solche Carbonsäuren, worin x = 2 und y = 1 ist. Beispiele hierfür sind in der US-A-3 412 054 beschrieben. Eine bevorzugte Gruppe von Dihydroxyalkansäuren sind alpha,alpha-Dimethylalkansäuren der allgemeinen Formel 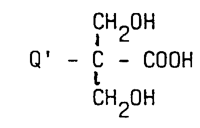 worin Q' Wasserstoff oder C₁-₈-Alkyl ist. Die bevorzugtesten Verbindungen sind alpha,alpha-Dimethylolpropionsäure und alpha,alpha-Dimethylolbuttersäure.

Weitere Beispiele für verwendbare Dihydroxyalkansäuren sind Dihydroxypropionsäure, Dimethylolessigsäure, Dimethylolbuttersäure, Dihydroxybernsteinsäure oder Dihydroxybenzoesäure. Geeignet sind auch die durch Oxydation von Monosacchariden zugänglichen Polyhydroxysäuren, z.B. Glukonsäure, Zuckersäure, Schleimsäure und Glucuronsäure.

Aminogruppenhaltige Verbindungen sind beispielsweise alpha,alpha-Diaminovaleriansäure, 3,4-Diaminobenzoesäure, 2,4-Diamino-toluol-sulfonsäure-(5) und 4,4-Diamino-di-phenylethersulfonsäure.

Als erfindungsgemäße Komponente c) können auch saure Polyester wie sie in der DE-A-39 03 804 beschrieben sind, eingesetzt werden. Diese können nach dem Fachmann bekannten Methoden hergestellt werden, wie z.B. in Wagner, Sarx; 5. Auflage; Lackkunstharze; Karl-Hanser Verlag; S. 86 - 99 beschrieben. Es können die üblichen Rohstoffe für die Polyesterherstellung eingesetzt werden.

Beispiele dafür sind die für die Herstellung der unter a) beschriebenen Polyester genannten Rohstoffe. Es ist zweckmäßig teilweise tri- und/oder höherfunktionelle Komponenten mitzuverwenden. Als trifunktionelle Komponenten können Triole, Tricarbonsäuren, Bisanhydride, Hydroxycarbonsäuren und Dihydroxysulfonsäuren verwendet werden. Bevorzugt sind Tricarbonsäuren und Dihydroxycarbonsäuren. Dise Polyester besitzen vorzugsweise ein Molekulargewicht von 300 bis 2000, eine Hydroxylzahl von 56 bis 374 und eine Säurezahl von 28 bis 187.

Die anionischen oder kationischen Gruppen der Komponente c) dienen zur Stabilisierung der wäßrigen Dispersion. Es können ionische und nicht-ionische Gruppen gemeinsam eingesetzt werden. Bevorzugt ist eine Stabilisierung durch ionische Gruppen.

Zur Herstellung eines anionischen Urethanprepolymers sind die Dihydroxycarbonsäuren bevorzugt. Besonders bevorzugt ist die Dimethylolpropionsäure. Die Komponente c) wird bevorzugt in einer Menge von etwa 0,4 bis etwa 7,5 Gew.-%, besonders bevorzugt etwa 0,8 bis 5,0 Gew.-% (berechnet als Carboxylgruppe COOH), bezogen auf das erfindungsgemäße Urethanprepolymer (Festharz), verwendet. Wenn die Carboxylgruppenmenge unter etwa 0,4 % liegt, ist es schwierig, eine stabile Emulsion herzustellen. Wenn dagegen die Menge 7,5 Gew.-% übersteigt, verstärkt sich die hydrophile Eigenschaft, was die Emulsion hochviskos macht und die Wasserbeständigkeit der Beschichtung verringert.

Die Mengen an a), b) und c) werden so gewählt, daß bei der Umsetzung ein Umsetzungsprodukt mit endständigen, bevorzugt primären OH-Gruppen entsteht, d.h. es wird mit einem Polyolüberschuß gearbeitet. Man kann mit einem OH- zu NCO-Verhältnis von über 1 bis 4 : 1 arbeiten, bevorzugt ist der Bereich von 1,1 bis 2 : 1, besonders bevorzugt von 1,1 bis 1,7 : 1. Bevorzugt handelt es sich um Polyurethane mit weniger als 280 mEquivalenten - NHCOO - pro 100 g Festharz. Das Umsetzungsprodukt kann verzweigt aufgebaut sein, bevorzugt ist es im allgemeinen aber linear aufgebaut.

Das hydroxyfunktionelle Umsetzungsprodukt (Komponente A) aus a), b) und c) wird mit Komponente B) in ein Polyurethanharz überführt, das CH-acide Gruppen aufweist. Auf diesem Weg werden CH-acide Gruppen in das Polyurethan eingeführt.

Die entstehenden Produkte können in Abhängigkeit von der Wahl der Komponente B) bevorzugt endständig beispielsweise folgende Gruppen aufweisen: 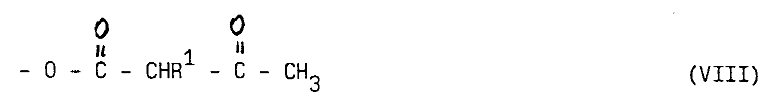 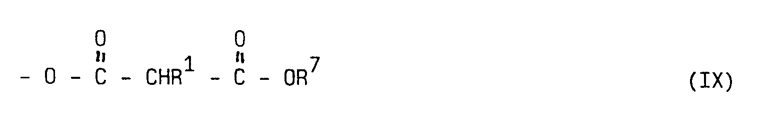 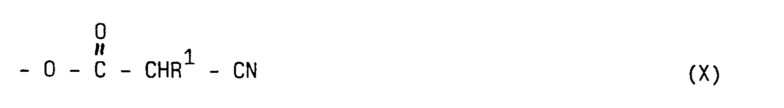 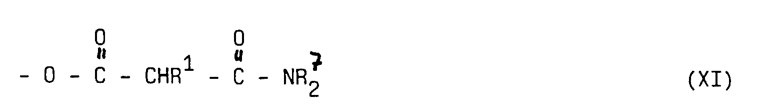 worin R¹ wie vorstehend für die allgemeine Formel (I) definiert ist, und R⁷ = C₁-C₈-Alkyl, linear oder verzweigt.

Bei geeigneter Wahl der Mengen an Ausgangskomponenten, besteht auch die Möglichkeit CH-acide Gruppen in die Polyurethan-Hauptkette einzubauen unter Verwendung von Poly-beta-Ketoestern mit einer Esterfunktionalität von gleich oder größer 2 als Komponente B). Dies kann beispielsweise unter Verwendung von Malonsäurediestern und Methantricarbonsäuretriestern erfolgen. Bevorzugt werden jedoch Harze hergestellt, die CH-acide Gruppen an den Kettenenden bzw. an Seitenketten tragen.

Die Synthese kann auf verschiedene in der Literatur bekannte Weisen erfolgen. So können die OH-Gruppen der Komponente A) über eine C-O-Bindung direkt an ein Carbonylzentrum gebunden werden. Beispiele hierfür sind folgende Reaktionen:
1. Die Umsetzung von Carbonsäuren mit CH-aciden Gruppen und Alkoholen unter Zusatz von üblichen Veresterungskatalysatoren oder Veresterungshilfsstoffen, wie z.B. Dicyclohexylcarbodiimid.
2. Die Umsetzung von aktivierten Carbonsäurederivaten, wie Carbonsäureestern, Carbonsäurehalogeniden oder Carbonsäureanhydriden mit Alkoholen, z.B. auf dem Wege der Umesterungsreaktion. 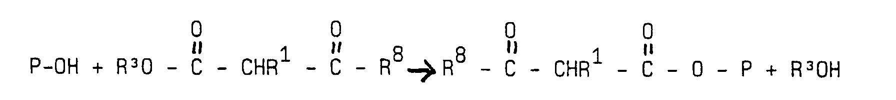 mit
   P = Polymer, R¹ und R³ wie oben definiert
   und
   R⁸ = -CH₃, -OR⁷, und R⁷ wie vorstehend definiert.
3. Die Umsetzung von Alkoholen mit Diketonen 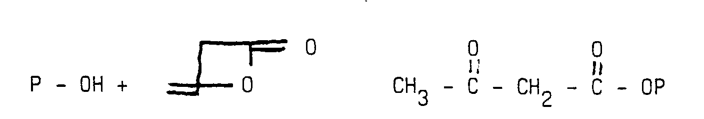
4. Reaktionen von Alkoholen mit Diketenaddukten

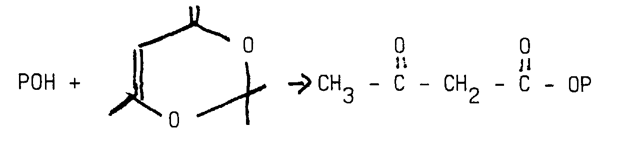

Eine Übersicht ist bei J. S. Witzemann, JOT 62, (1990), 101 beschrieben.

Als Komponente B) geeignete Reagentien für derartige Funktionalisierungen sind daher beispielsweise:
Carbonsäuren mit CH-aciden Gruppen, deren aktivierte Derivate, wie Ester, Halogenide (z.B. Chloride) und Anhydride, Diketone und Diketenaddukte, beispielsweise:
Acetessigsäure; aliphatische beta-Ketoester, deren Alkoholkomponenten flüchtig sind: wie Acetessigsäuremethyl-, -ethyl-, -tert.butyl-ester; beta-Ketocarbonsäuren, wie Acetessigsäure; Diketen und Diketenaddukte: wie 2,2,6-Trimethyl-4H-dioxin-4-on; Methantricarbonsäureester, wie Methantricarbonsäuretrimethylester oder -triethylester; aliphatische Cyanessigsäureester, wie Cyanessigsäuremethyl, -ethyl oder butylester.

Wie vorstehend beschrieben kann es günstig sein die Komponenten A) und B) gegebenenfalls in Gegenwart von Veresterungshilfsmitteln umzusetzen.

Die Acetessigesterderivate der polymeren Polyole können gegebenenfalls noch mit primären oder sekundären Aminen, wie der DE-A-39 32 517 beschrieben, zu Enaminen umgesetzt werden. Auf diesem Wege kann die CH-Acidität erhöht werden.

Das aus A) und B) erhaltene Polyurethanharz kann in Ionen überführbare Gruppen aufweisen, die ganz oder teilweise in die entsprechenden Salze überführt werden.

Enthält das Polyurethanharz anionenbildende Gruppen, so können diese durch den Verfahrensschritt C) in Anionen umgewandelt werden. Für C) dient dann bevorzugt ein tert.-Amin. Geeignete tertiäre Amine sind z.B. Trialkylamine, wie Trimethylamin, Triethylamin, Triisopropylamin, Tri-n-propylamin und Tri-n-butylamin; N-Alkylmorpholine, wie N-Methylmorpholin und N-Ethylmorpholin; N-Dialkylalkanolamine, wie N-Dimethylethanolamin, N-Diethylethanolamin und N-Dimethylisopropanolamin und Mischungen aus mindestens zwei dieser Verbindungen.

Enthält das Polyurethanharz kationenbildende Gruppen, so wird für C) bevorzugt eine oder mehrere Säure verwendet. Geeignete Säure sind z.B. Phosphorsäure oder saure Phosphorsäureester, Borsäure oder organische Carbonsäuren wie Ameisensäure, Essigsäure, Propionsäure, Acrylsäure, Dihydroxycarbonsäure wie Milchsäure, Dimethylolpropionsäure oder Zitronensäure, oder Dicarbonsäuren wie Malonsäure, Glutarsäure oder Oxalsäure. Es können auch Mischungen der Säuren eingesetzt werden. Es ist aber auch eine Quartärnisierungsreaktion mit Alkylierungsmitteln, wie z.B. die Umsetzung mit Alkylhalogeniden oder Epoxiden, möglich.

Das hydrophile Gruppen tragende Polyurethanharz kann vor oder nach der Kettenverlängerung in die wäßrige Phase überführt werden und ergibt eine feinteilige Polyurethandispersion mit einer mittleren Teilchengröße von größer 10 und kleiner als 2000 nm, bevorzugt über 50 und unter 500 nm. Die Verteilung kan dabei monomodal oder bimodal, bevorzugt monomodal sein.

Im allgemeinen ist es nicht notwendig, zur Überführung der erfindungsgemäß eingesetzten Polyurethanharze in wäßrige Dispersionen Emulgatoren mitzuverwenden. Dies schließe jedoch nicht aus, daß Emulgatoren ionischer und nicht-ionischer Art zugesetzt werden können, um ein Emulgieren zu erleichtern, und gegebenenfalls die Zahl der ionisierbaren Gruppen zu senken.

Die erfindungsgemäßen Polyurethandispersionen, die durch Umsetzung der Komponenten A) und B) und anschließendes Überführen in Wasser hergestellt werden, können als solche zur Formulierung wäßriger Überzugsmittel verwendet werden.

Die aus den Komponenten A) und B) wie vorstehend beschrieben erhältlichen Polyurethanharze können durch Ausnutzung der CH-aciden Gruppierungen auch einer Kettenverlängerung unterzogen werden. Diese Kettenverlängerung kann vor oder nach der Überführung in die wäßrige Phase erfolgen.

Bevorzugt ist die Überführung des Polyurethanharzes aus A) und B) in die wäßrige Phase und die anschließende Umsetzung von mindestens einem Teil der mit B) eingeführten CH-aciden Gruppen mit geeigneten Kettenverlängerungsmitteln (Komponente D)). Dabei werden die Mengenverhältnisse der Reaktionskomponente in Abhängigkeit von der Molmasse und dem Gehalt der CH-aciden Gruppen gewählt.

Wie vorstehend erwähnt, kann zur erfindungsgemäßen Kettenverlängerung mit der Komponente D) auch eine Polyurethanharzdispersion, wie beispielsweise in der EP-A-0 367 051 beschrieben, verwendet werden. Zur Herstellung derartiger Dispersionen wird mindestens ein organisches Polyisocyanat mit mindestens einer Verbindung mit mehr als einer mit Isocyanat reaktiven Gruppe und mindestens einer ionischen Gruppe zur Ionenbildung befähigten Gruppe und/oder hydrophilen Gruppe, mit mindestens einem Mono- und/oder Polyalkohol, der eine CH-acide Gruppe enthält, sowie gegebenenfalls einem oder mehreren Kettenverlängerern und gegebenenfalls einem oder mehreren Polyalkoholen zur Reaktion gebracht.

Die Polyurethane können auch Harnstoffgruppen enthalten, wenn primäre oder sekundäre Amine mitverwendet werden oder wenn mit einem NCO-Überschuß gearbeitet und anschließend in Wasser dispergiert wird. Die erhaltenen Polyurethane können beispielsweise in Gegenwart von Basen wie Ammoniak oder organischen Aminen, in Wasser dispergiert werden.

Aber auch alle auf anderem Wege hergestellten Polyurethane bzw. Polyharnstoffharze mit CH-aciden Gruppen können allein oder als Mischung mit den vorstehend beschriebenen Umsetzungsprodukten aus A) und B) zur Reaktion gebracht werden.

Zur erfindungsgemäßen Kettenverlängerung geeignet sind Verbindungen (Komponente D), die mit CH-aciden Zentren reagieren können. Dabei muß mindestens eine zweifache Reaktionsmöglichkeit gegeben sein.

Hierfür geeignete Verbindungen sind z.B.:
1. Aromatische, araliphatische, aliphatische oder cycloaliphatische Monoaldehyde oder Polyaldehyde, die monomer oder polymer vorliegen können, bevorzugt aliphatische oder cycloaliphatische sterisch wenig behinderte Aldehyde mit Molekulargewichten von 30 bis 500, bevorzugt 30 - 300, wie Formaldehyd, Acetaldehyd, Glyoxal, Glutardialdehyd, Paraformaldehyd, Propionaldehyd, Butyraldehyd, Isobutylraldehyd, 2-Methylpentenal, Furfural oder Acrolein.
2. Aromatische, aliphatische oder cycloaliphatische Polyisocyanate, die in der Lackchemie üblich sind. Neben den bereits unter b) als Beispiele aufgeführten Diisocyanaten können auch NCO-haltige Prepolymere oder höherfunktionelle Isocyanate (mit einer NCO-Funktionalität von > 2) eingesetzt werden. Das sind z.B. Isocyanate vom Biuret- oder Isocyanurattyp, aber auch Produkte, die aus einem Überschuß an Diisocyanaten durch Umsetzung mit Polyolen erhalten werden. Es kann sich sowohl um niedermolekulare und hochmolekulare Polyole handeln. Beispiele für derartige Polyisocyanate sind das Addukt von 3 mol Isophorondiisocyanat an Trimethylolpropan oder polyfunktionelle NCO-haltige Prepolymere. Unter den Prepolymeren sind bevorzugt auch wasseremulgierbare Prepolymere zu verstehen, die durch ionische und/oder nicht-ionische hydrophile Gruppen stabilisiert sein können. Durch Anionen stabilisierte NCO-Prepolymere sind z.B. in der EP-A-0 089 497 als Reaktionsprodukt vor der Kettenverlängerung in der Wasserphase beschrieben.

Eine weitere Gruppe von geeigneten aliphatischen Polyisocyanaten kann beispielsweise durch selektive Reaktion silylierter Polyalkohole mit Isocyanatocarbonsäurechloriden hergestellt werden. Beispiele für solche estergruppenhaltige Polyisocyanate sind solche auf der Basis von Hexandiisocyanat und Pentaerythrit.

Die geeigneten Kettenverlängerungsreagentien können einzeln oder in Kombination eingesetzt werden.

Die Kettenverlängerung kann zumindest auch zum Teil schon vor der Überführung in die Wasserphase erfolgen, bevorzugt wird sie jedoch in der wäßrigen Dispersion durchgeführt. Dazu ist es vorteilhaft, wenn D) eine gute Emulgierbarkeit in der Dispersionsphase aufweist. Das kann z.B. durch hydrophile Gruppen in D) unterstützt werden. Zur Beschleunigung der Reaktion kann die Mischung gegebenenfalls auf leicht erhöhte Temperaturen erwärmt werden.

Die Kettenverlängerung kann gegebenenfalls in Gegenwart von einer oder mehreren niedermolekularen Verbindungen mit einem Molekulargewicht < 1000, die ebenfalls CH-acide Gruppen tragen, durchgeführt werden. Sie haben eine Funktionalität größer oder gleich 2, bevorzugt zwischen 3 und 5, und können also zu einer Verzweigung führen. Sie werden im folgenden als Komponente E) bezeichnet.

Bei den als Komponente E) eingesetzten CH-aciden Verbindungen handelt es sich um solche, die mindestens zwei CH-acide Wasserstoffatome enthalten, die beispielsweise aus einer oder mehreren der folgenden Gruppierungen stammen können, die gleich oder verschieden sein können: 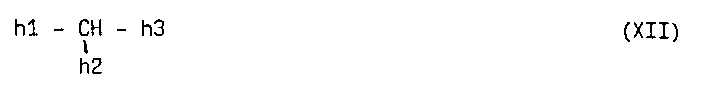 mit h1 ausgewählt aus 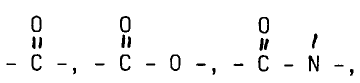 - CN, - NO₂
mit h2 ausgewählt aus 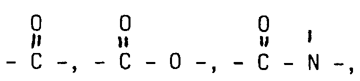 - CN,
mit h3 ausgewählt aus 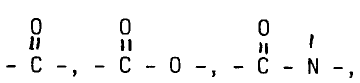 -H, Alkyl, Alkylen
wobei die durch die vorstehenden Reste h1, h2, h3 definierten Carboxyl- oder Carbonamid-Gruppen jeweils über das Kohlenstoffatom an die CH-Gruppe gebunden sind und die CH-Gruppe gegebenenfalls über mindestens einen der Reste h1, h2 und/oder h3 an eine oligomere Einheit gebunden ist. Die CH-acide Funktionalität der Komponente E) beträgt im Mittel größer oder gleich 2 pro Molekül. Wenn h3 in der allgemeinen Formel die Bedeutung eines Wasserstoffatoms hat, so kann eine derartige Gruppe genügen, da diese zwei acide Wasserstoffatome aufweist. Die CH-acide Funktionalität von E) beträgt im Mittel größer oder gleich 2, d.h. im Gemisch mit höherfunktionellen Molekülen können auch monofunktionelle Verbindungen mit eingesetzt werden.

Beispiele für Verbindungen mit einer Funktionalität > 2 und einem mittleren Molekulargewicht von kleiner 1000, sind Acetessigsäurederivate z.B. Ester oder Amide. Ester erhält man z.B. durch Umsetzung von Polyolen, z.B. Trimethylolpropan, Pentaerythrit oder Oligoestern mit einer Funktionalität > 2, mit CH-aciden Carbonsäuren oder ihren Derivaten, Diketen oder Diketenaddukten. Entsprechende Amide erhält man beispielsweise durch Umsetzung von Polyaminen mit einer Funktionalität über 2 mit CH-aciden Carbonsäuren oder ihren Derivaten, Diketen oder Diketenaddukten.

Die Umsetzung der Komponenten A) bis E) miteinander erfolgt bevorzugt ohne Lösungsmittel, bevorzugt stufenweise nach den bekannten Verfahren der organischen Chemie. Hierbei werden beispielsweise zunächst die Polyolkomponente a), das Isocyanat b) und die gegenüber Isocyanatgruppen mehrfunktionelle Komponente c) lösungsmittelfrei miteinander umgesetzt. Dabei können zunächst die Komponenten a) und b) miteinander zur Reaktion gebracht und die weitere Umsetzung mit c) durchgeführt werden oder alle Komponenten gleichzeitig umgesetzt werden. Das so erhaltene OH-haltige Umsetzungsprodukt wird weiter lösungsmittelfrei mit B) zu einem funktionalisierten Urethan-Harnstoff umgesetzt.

Die Reaktion kann bevorzugt lösemittelfrei erfolgen, sie kann aber auch in dem Fachmann an sich geläufigen für die Polyurethansynthese geeigneten Lösemitteln durchgeführt werden. Dabei ist es dann vorteilhaft, die Lösemittel gegebenenfalls im Vakuum vor der weiteren Verarbeitung abzudestillieren. Die Destillation kann auf jeder Verfahrensstufe erfolgen. Geringe Mengen an zurückbleibenden Lösungsmittelresten stören in der fertigen Dispersion nicht.

Das CH-acide funktionalisierte Polyurethanharz kann nach Überführen in die wäßrige Phase gemäß Verfahrensschritt C) mit Komponente D) kettenverlängert werden. Gegebenenfalls wird in Gegenwart von Komponente E) kettenverlängert. D) und/oder E) sollen homogen mit dem CH-acid funktionalisierten Polyurethanharz gemischt werden. Das kann vor oder nach der Salzbildung in der organischen Phase geschehen sowie vor oder nach dem Verdünnen mit Wasser. Die Kettenverlängerungsreaktion läuft bevorzugt in der wäßrigen Dispersionsform ab.

Bei der Herstellung der erfindungsgemäßen Polyurethanharzdispersion werden die Einzelbausteine A), B) sowie gegebenenfalls D) und E), sowie a), b) und c) in solchen Mengen miteinander zur Reaktion gebracht, daß vom Fachmann gewünschte Bindemittelqualitäten erzielt werden, wie Wasserdispergierbarkeit, Viskositätsverhalten, Filmbildungseigenschaften. Durch die Wahl der Art und der Menge der Komponenten können auch Eigenschaften wie z.B. Härte und Bewitterungsfähigkeit von aus den Dispersionen erhaltenen Überzügen beeinflußt werden. Die Wahl der Art und Menge der Komponenten läßt sich vom Fachmann anhand der hier aufgezeigten Lehre leicht, gegebenenfalls anhand von Routineversuchen ermitteln.

Das Herstellen der wäßrigen PU-Dispersion des nicht kettenverlängerten, sowie des kettenverlängerten Harzes kann nach bekannten Verfahren erfolgen. Beispielsweise ist es möglich die neutralisierten Harze vorzulegen und unter gutem Dispergieren mit Wasser zu versetzen. Ebenso kann die gegebenenfalls Neutralisationsmittel enthaltende Wasserphase vorgelegt und unter Rühren das Harz eingearbeitet werden. Ebenso ist eine kontinuierliche Arbeitsweise möglich, d.h. es werden in bekannten Aggregaten, z.B. einem Rotor-Statormischer, gleichzeitig Harz, Wasser und Neutralisationsmittel homogen zusammengemischt. Die Überführung in die Wasserphase kann durch erhöhte Temperatur unterstützt werden.

Der pH-Wert der resultierenden Polyurethandispersion wird kontrolliert und kann beispielsweise auf einen Wert zwischen 6 und 8 eingestellt werden. Es entsteht aus den Komponenten eine feinteilige opake bis milchig trübe wäßrige Dispersion.

Die erfindungsgemäß verwendeten anionischen PU-Dispersionen weisen eine Säurezahl von 5 bis 90 (bezogen auf den Festkörper) bevorzugt über 10 und unter 50 auf. Der Festkörper beträgt zwischen 25 und 65 Gew.-%, bevorzugt über 35 und unter 60 Gew.-%. Das Zahlenmittel der Molmasse (Mn) der in den erfindungsgemäßen bzw. den erfindungsgemäß verwendeten PU-Dispersionen enthaltenen Polyurethanharze beträgt beispielsweise 2500 bis 1000000, wobei die Untergrenze bevorzugt bei 5000, besonders bevorzugt bei 20000 und die Obergrenze bevorzugt bei bis zu 50000 liegt.

Aus den erfindungsgemäß verwendeten kettenverlängerten und nicht kettenverlängerten PU-Dispersionen können wäßrige, lösungsmittelarme Überzugsmittel, bevorzugt Basislacküberzugsmittel, hergestellt werden. Dazu werden der PU-Dispersion beispielsweise Pigmente, weitere Bindemittel, Additive sowie gegebenenfalls geringe Mengen an Lösemitteln zugesetzt.

Die in den erfindungsgemäßen Überzugsmitteln enthaltene Polyurethanharzkomponente I) kann ein oder mehrere weitere Bindemittel enthalten. Dies kann beispielsweise zur Erzielung synergistischer Effekte günstig sein. Beispiele für weitere Bindemittel sind dem Fachmann geläufige übliche filmbildende wasserverdünnbare Harze, wie wasserverdünnbare Polyesterharze, wasserverdünnbare Polyacrylatharze und andersartige wasserverdünnbare Polyurethanharze. Es kann sich um reaktive oder nicht-funktionelle Harze handeln. Die Menge der der Komponente I) zugesetzten Harze kann 0 bis 95 Gew.-% des gesamten in der Komponente I) enthaltenen Harzfestkörpers betragen. Bevorzugt sind 0 bis 80 Gew.-% und besonders bevorzugt 0 bis 60 Gew.-%.

Die Spezifikation und der Mengenanteil von zusätzlichen Bindemitteln in der Komponente I) werden so gewählt, daß sich bevorzugt ein Gemisch ergibt, das im Mittel einen Gehalt an ionischen, in ionische Gruppen überführbaren und/oder hydrophilen Gruppen von 5 bis 200 mEqu pro 100 g Festharz aufweist.

Die zugesetzten weiteren Bindemittel können gegebenenfalls mit den erfindungsgemäß definierten Polyurethanharzen bei erhöhten Temperaturen präkondensiert werden.

Wasserverdünnbare Polyester sind beispielsweise solche mit freien Carboxylgruppen, d.h. Polyester mit hoher Säurezahl. Es sind grundsätzlich zwei Methoden bekannt, die benötigten Carboxylgruppen in das Harzsystem einzufügen. Der erste Weg besteht darin, die Veresterung bei der gewünschten Säurezahl abzubrechen. Bei dieser Verfahrensweise wird der Einbau von sterisch gehinderten Carboxylgruppen, beispielsweise durch Kondensation mit Dimethylolpropionsäure, bevorzugt. Nach Neutralisation mit Basen sind die so erhaltenen Polyester in Wasser löslich. Die zweite Möglichkeit besteht in der Bildung partieller Ester von Di- oder Polycarbonsäuren mit hydroxylreichen Polyestern mit niedriger Säurezahl. Für diese Reaktion werden üblicherweise Anhydride der Dicarbonsäuren herangezogen, welche unter milden Bedingungen unter Ausbildung einer freien Carboxylgruppe mit der Hydroxylkomponente umgesetzt werden.

Die wasserverdünnbaren Polyacrylatharze können ebenso wie die oben beschriebenen Polyesterharze freie Carboxylgruppen enthalten. Es handelt sich in der Regel um Acryl- bzw. Methacrylcopolymerisate, und die Carboxylgruppen stammen aus den Anteilen an Acryl- oder Methacrylsäure.

Unter zusätzlichen Polyurethandispersionen sind beispielsweise solche zu verstehen, die in der DE-A-36 28 125 beschrieben werden. Es sind anionisch stabilisierte PU-Dispersionen, die durch Umsetzung von Polyolen, Diisocyanaten, ionischen Verbindungen sowie Kettenverlängerung mit Aminen entstehen. Weiterhin können auch durch nicht-ionische hydrophile Gruppen stabilisierte PU-Dispersionen den erfindungsgemäßen Überzugsmittel zugesetzt werden.

Die wasserverdünnbaren Polyester oder Polyurethanharze können auch durch geeignete Polymerisationsverfahren in Dispersionen acryliert oder gepfropft werden. Beispiele für verwendbare acrylierte Polyurethandispersionen sind in der DE-A-41 22 265 beschrieben.

Eine weitere Gruppe von wäßrigen Dispersionen, die den erfindungsgemäßen Überzugsmitteln zugesetzt werden können, sind die in der DE-A-36 28 124 beschriebenen Dispersionen auf Basis von ionischen epoxidgruppenhaltigen Polykondensaten, die mit copolymerisierbaren ungesättigten Monomeren umgesetzt werden.

Bei Zusatz von weiteren Bindemitteln ist es selbstverständlich, daß zusätzliche ionisch stabilisierte Harze und Dispersionen nur zusammen mit gleichartig geladenen erfindungsgemäßen ionischen Dispersionen verwendet werden können, um die Stabilität nicht negativ zu beeinflussen.

Zur Bereitung der erfindungsgemäßen Überzugsmittel können verschiedene Vernetzer, wie beispielsweise Formaldehyd-Kondensationsharze, wie Phenol-Formaldehyd-Kondensationsharze und Amin-Formaldehydkondensationsharze, sowie blockierte Polyisocyanate verwendet werden. Die Vernetzer können einzeln und im Gemisch eingesetzt werden. Das Mischungsverhältnis Vernetzer zu Polyurethanharz beträgt bevorzugt 10 : 90 bis 80 : 20, besonders bevorzugt 20 : 80 bis 70 : 30, jeweils bezogen auf das Festkörpergewicht.

Zu als Vernetzer geeigneten Aminharzen zählen beispielsweise alkylierte Kondensate, die durch Umsetzung von Aminotriazinen und Amidotriazinen mit Aldehyden hergestellt werden. Nach bekannten technischen Verfahren werden Amine oder Aminogruppen tragende Verbindungen wie Melamin, Guanamin, Acetoguanamin, Benzoguanamin, Dicyandiamid oder Harnstoff in Gegenwart von Alkoholen, wie Methanol, Ethanol, Propanol, Butanol oder Hexanol mit Aldehyden, insbesondere Formaldehyd, kondensiert. Die Reaktivität derartiger Aminharze wird bestimmt durch den Kondensationsgrad, das Verhältnis der Amin- bzw. Amidkomponenten zu Formaldehyd und durch die Art des verwendeten Veretherungsalkohols. Beispiele für derartige Harze und ihre Herstellung werden in "Houben-Weyl, Methoden der organischen Chemie" 1963, Seite 357, beschrieben. Diese Produkte sind im Handel geläufig.

Als Vernetzungsmittel können auch blockierte Polyisocyanate eingesetzt werden. Es können bei der Erfindung beliebige Polyisocyanate benutzt werden, bei denen die Isocyanatgruppen mit einer Verbindung umgesetzt worden sind, so daß das gebildete blockierte Polyisocyanat gegenüber Hydroxylgruppen und Wasser bei Raumtemperatur beständig ist, bei erhöhten Temperaturen, in der Regel im Bereich von etwa 90 bis etwa 250°C, aber reagiert. Bei der Herstellung der blockierten Polyisocyanate können beliebige für die Vernetzung geeignete organische Polyisocyanate verwendet werden. Bevorzugt sind die Isocyanate, die etwa 3 bis etwa 36, insbesondere etwa 8 bis 15 Kohlenstoffatome enthalten. Beispiele von geeigneten Diisocyanaten sind die vorstehend als Komponente b) genannten Diisocyanate.

Bevorzugt werden Polyisocyanate von höherer Isocyanatfunktionalität, wie die vorstehend unter b) und D) genannten verwendet. Beispiele dafür sind Tris-(4-isocyanatophenyl)-methan, 1,3,5-Triisocyanatobenzol, 2,4,6-Triisocyanatotoluol, 1,3,5-Tris-(6-Isocyanatohexan)-biuret, Bis-(2,5-diisocyanato-4-methyl-phenyl)-methan und polymere Polyisocyanate, wie Dimere und Trimere von Diisocyanatotoluol. Ferner kann man auch Mischungen von Polyisocyanaten benutzen.

Die bei den erfindungsgemäßen Überzugsmitteln als Vernetzungsmittel in Betracht kommenden organischen Polyisocyanate können auch Prepolymere sein, die sich beispielsweise von einem Polyol einschließlich eines Polyetherpolyols oder eines Polyesterpolyols ableiten. Dazu werden bekanntlich Polyole mit einem Überschuß von Polyisocyanaten umgesetzt, wodurch Prepolymere mit endständigen Isocyanatgruppen entstehen. Beispiele von Polyolen, die hierfür verwendet werden können, sind einfache Polyole, wie Glykole, z.B. Ethylenglykol und Propylenglykol und andere Polyole, wie Glycerin, Trimethylolpropan, Hexantriol und Pentaerythrit; ferner Monoether, wie Diethylenglykol und Tripropylenglykol sowie Polyether, die Kondensate solcher Polyole mit Alkylenoxiden sind. Beispiele von Alkylenoxiden, die sich für die Kondensation mit diesen Polyolen unter Bildung von Polyethern eignen, sind Ethylenoxid, Propylenoxid, Butylenoxid und Styroloxid. Man bezeichnet diese Kondensate im allgemeinen als Polyether mit endständigen Hydroxylgruppen. Sie können linear oder verzweigt sein. Beispiele von solchen Polyethern sind Polyoxyethylenglykol von eine Molekulargewicht von 1540, Polyoxypropylenglykol mit einem Molekulargewicht von 1025. Polyoxytetramethylenglykol, Polyoxyhexamethylenglykol, Polyoxynonamethylenglykol, Polyoxydecamethylenglykol, Polyoxydodecamethylenglykol und Mischungen davon. Andere Typen von Polyoxyalkylenglykolethern können ebenfalls verwendet werden. Besonders geeignete Polyetherpolyole sind diejenigen, die man erhält durch Umsetzung von derartigen Polyolen, wie Ethylenglykol, Diethylenglykol, Triethylenglykol, 1,4-Butandiol, 1,3-Butandiol, 1,6-Hexandiol und Mischungen davon; Glycerintrimethylolethan, Trimethylolpropan, 1,2,6-Hexantriol, Dipentaerythrit, Tripentaerythrit, Polypentaerythrit, Methylglukosiden und Saccharose mit Alkylenoxiden, wie Ethylenoxid, Propylenoxid oder Mischungen davon.

Die blockierten Polyisocyanate, die erfindungsgemäß als Vernetzer eingesetzt werden können, können mit üblichen flüchtigen einwertigen Blockierungsmitteln blockiert sein, wie sie in der Lackchemie eingesetzt werden. Beispiele hierfür sind verschiedene Alkohole, Oxime, Phenole, Amine, beta-Ketoverbindungen, Phthalimid usw. Die Polyisocyanate können in einem Molekül mit gleichen oder verschiedenen Blockierungsmitteln blockiert sein. Als Vernetzer können auch Gemische unterschiedlich blockierter Polyisocyanate verwendet werden sowie auch Polyisocyanate, die intramolekular unterschiedlich blockiert sind.

Für die Blockierung der Polyisocyanate können beispielsweise beliebige geeignete aliphatische, cycloaliphatische oder aromatische Alkylmonoalkohole verwendet werden. Beispiele dafür sind aliphatische Alkohole, wie Methyl-, Ethyl-, Chlorethyl-, Propyl-, Butyl-, Amyl-, Hexyl-, Heptyl-, Octyl-, Nonyl-, 3,3,5-Trimethylhexyl-, Decyl- und Laurylalkohol; cycloaliphatische Alkohole, wie Cyclopentanol und Cyclohexanol; aromatische Alkylalkohole, wie Phenylcarbinol und Methylphenalcarbinol. Es können auch geringe Anteile an höhermolekularen und relativ schwer flüchtigen Monoalkoholen gegebenenfalls mitverwendet werden, wobei diese Alkohole nach ihrer Abspaltung als Weichmacher in den Überzügen wirken.

Andere geeingete Blockierungsmittel sind Oxime, wie Methylethylketoxim, Acetonoxim und Cyclohexanonoxim, sowie auch Caprolactame, Phenole, Pyrazolderivate und Hydroxamsäureester. Bevorzugte Blockierungsmittel sind Malonester, Acetessigester, beta-Diketone und Methyl-ethyl-ketoxim.

Die blockierten Polyisocyanate werden hergestellt, in dem man eine ausreichende Menge eines Blockierungsmittels mit dem organischen Polyisocyanat gegebenenfalls unter Zusatz von Katalysatoren umsetzt, so daß keine freien Isocyanatgruppen mehr vorhanden sind.

Weiterhin können die erfindungsgemäßen Überzugsmittel dem Fachmann bekannte Polymermikroteilchen enthalten. Es können vernetzte oder unvernetzte Mikroteilchen eingesetzt werden. Beispiele für solche Polymermikroteilchen sind in der EP-A-0 038 127 und EP-A-0 234 362 beschrieben.

Weiterhin können die Überzugsmittel lacktechnische Additive enthalten, beispielsweise rheologiebeeinflussende Mittel, wie hochdisperse Kieselsäure, Schichtsilikate oder polymere Harnstoffverbindungen. Als Verdicker wirken auch beispielsweise wasserlösliche Celluloseether wie Hydroxyethylcellulose, Methylcellulose oder Carboxymethylcellulose, sowie synthetische Polymere mit ionischen und/oder assoziativ wirkenden Gruppen wie Polyvinylalkohol, Poly(meth)acrylamid, Poly(meth)acrylsäure, Polyvinylpyrrolidon, Styrol-Maleinsäureanhydrid oder Ethylen-Maleinsäureanhydrid-Copolymere und ihre Derivate oder auch hydrophob modifizierte ethoxylierte Polyurethane oder Polyacrylate. Daneben können auch Antiabsetzmittel, Verlaufsmittel, Lichtschutzmittel, Antischaummittel, wie beispielsweise silikonhaltige Verbindungen; Netzmittel sowie haftvermittelnde Substanzen eingesetzt werden. Unter Netzmittel werden auch bekannte Pastenharze verstanden, wie sie z.B. in der DE-A-40 00 889 beschrieben sind, die zum besseren Dispergieren und Vermahlen der Pigmente eingesetzt werden können. Zum Beschleunigen der Härtung können gegebenenfalls Katalysatoren eingesetzt werden, es ist jedoch auch möglich durch thermische Energie ohne Einsatz eines Katalysators zu härten.

Als in geringen Mengen vorhandene Lösungsmittel sind übliche lacktechnische Lösungsmittel geeignet, diese können von der Herstellung der Bindemittel stammen oder werden separat zugegeben. Beispiele für solche Lösungsmittel sind ein- oder mehrwertige Alkohole, z.B. Propanol, Butanol, Hexanol; Glykolether oder -ester, z.B. Diethylenglykoldialkylether, Dipropylenglykoldialkylether, jeweils mit C₁-₆-Alkyl, Ethoxypropanol, Butylglykol; Glykole z.B. Ethylenglykol; Propylenglykol, und dessen Oligomere, N-Methylpyrrolidon sowie Ketone wie Methylethylketon, Aceton, Cyclohexanon; aromatische oder aliphatische Kohlenwasserstoffe, z.B. Toluol, Xylol oder C₆ - C₁₂ lineare oder verzweigte aliphatische Kohlenwasserstoffe.

Über die Anzahl der Lösungsmittel kann der Verlauf sowie die Viskosität des Überzugsmittels beeinflußt werden. Über den Siedepunkt der eingesetzten Lösungsmittelmischung kann das Abdunstverhalten beeinflußt werden.

Als Pigmente sind beispielsweise anorganische und/oder organische Buntpigmente und/oder Effektpigmente wie z.B. Metallic- oder Perlglanzpigmente geeignet. Es handelt sich dabei beispielsweise um Kupfer oder -legierungen, Aluminium, Stahl oder um mit Metalloxiden beschichtete Schichtsilikate. Diese können einzeln oder im Gemisch eingesetzt werden. Bevorzugt werden Aluminiumpigmente eingesetzt. Die Menge beträgt zwischen 0,5 bis 15 Gew.-% bezogen auf das Überzugsmittel. Werden die PU-Dispersionen als alleinige Bindemittel eingesetzt, werden als Metallicpigmente solche handelsüblichen Metallpulver bevorzugt, die für wäßrige Systeme speziell vorbehandelt sind. Die Metallpulver können zusammen mit einem oder mehreren weiteren nicht Metallic-Pigmenten oder Füllstoffen, z.B. Mikrotitandioxid, feindisperse Kieselsäure, eingesetzt werden.

Als weitere Pigmente können bekannte organische oder anorganische Farbpigmente eingesetzt werden. Beispiele für Buntpigmente sind Chinacridone, Perylene und Phthalocyanine. Beispiele für anorganische Pigmente sind Ruß, Titandioxid oder Eisenoxidpigmente, transparente Pigmente z.b. mikronisiertes Titandioxid, mikronisiertes Bariumsulfat oder Siliciumdioxid. Gegebenenfalls können auch Füllstoffe wie Koalin, Glimmer, Kreide, Bariumsulfat, Kieselsäuren oder Quarzmehl zugesetzt werden. Mit diesen Farbpigmenten werden bevorzugt Uni-Basislacke hergestellt.

Die erfindungsgemäßen Überzugsmittel können nach an sich bekannten Methoden hergestellt werden. Beispielsweise können die Pigmente und/oder Füllstoffe in einem Teil der Bindemitteldispersion dispergiert und vermahlen werden. Dabei können auch spezielle Pastenharze eingesetzt werden. Die Viskosität kann durch Zugabe von Wasser oder gegebenenfalls Lösungsmittel auf einen geeigneten Wert eingestellt werden. Nach dem Vermahlen können die weiteren Lackbestandteile, beispielsweise weitere PU-Dispersion, zusätzliche Bindemittel, Vernetzer, rheologiebeeinflussende Mittel, Entschäumer, Antikratermittel, Verlaufsmittel, Katalysatoren oder Lösungsmittel, zugesetzt werden. Gegebenenfalls wird der Festkörper und der pH-Wert des Überzugsmittels eingestellt. Es ist darauf zu achten, daß die verwendeten Bestandteile miteinander verträglich sind und eine lagerstabile Überzugsmittelzusammensetzung ergeben.

Der pH-Wert der Überzugsmittel liegt bevorzugt bei 6,5 bis 8. In der Regel weisen die fertigen Überzugsmittel einen Festkörpergehalt von 10 - 45 Gew.-% auf und die Viskosität (mit Auslaufbecher DIN 4) beträgt 15 bis 35 sec. Ihr Wassergehalt liegt bei 55 - 90 Gew.-%, der Gehalt der organischen Lösungsmittel bei 0 - 20 Gew.-%, bevorzugt unter 10 Gew.-%, besonders bevorzugt unter 5 Gew.-%, jeweils auf das gesamte Überzugsmittel bezogen.

Der Festkörpergehalt und die Viskosität können direkt vor der Anwendung auf die jeweiligen Applikationsbedingungen abgestimmt werden.

Die Bindemittel sind besonders für die Herstellung von Überzugsmitteln für die farbgebenden Basisschichten geeignet. Es ist jedoch auch möglich andere Überzugsmittel z.B. Grundierungen, Füller oder Steinschlagschutzschichten daraus herzustellen. Dabei wird die Auswahl der Pigmente und Additive und ihre Konzentration dem jeweiligen Verwendungszweck angepaßt.

Die Erfindung betrifft auch ein Verfahren zur Herstellung eines Mehrschichtüberzuges, bei dem beispielsweise auf ein Substrat gegebenenfalls als erste Schicht eine beliebige Grundierung oder eine Haftungsschicht aufgebracht wird. Diese kann bevorzugt aus wasserverdünnbaren Überzugsmitteln hergestellt werden. Auf diese erste Schicht wird eine farbige Basislackschicht mit dem erfindungsgemäßen Überzugsmittel aufgetragen. Diese Basislackschicht wird entweder in der Wärme getrocknet oder es kann naß-in-naß, gegebenenfalls nach kurzem Ablüften, weitergearbeitet werden. Auf diese Schicht wird eine Klarlackschicht aufgetragen. Als Klarlack sind grundsätzlich alle bekannten oder nicht transparent pigmentierten Überzugsmittel geeignet. Hierbei können sowohl konventionelle lösungsmittelhaltige, 1- oder 2-Komponenten-Lacke, wasserverdünnbare Klarlacke, Pulverklarlacke oder durch Strahlung härtbare Lacke eingesetzt werden. Basislack- und Klarlackschicht werden bevorzugt naß-in-naß appliziert.

Nach dem Auftragen werden die Klarlackschicht und gegebenenfalls die Basislackschicht bevorzugt in der Wärme getrocknet. Die Trocknungsbedingungen der Decklackschicht (Basislack und Klarlack) richten sich nach dem verwendeten Klarlacksystem. Sie können beispielsweise bei 20 bis 150°C liegen. Für Reparaturzwecke sind beispielsweise Temperaturen von 20 bis 80°C bevorzugt. Für Zwecke der Serienlackierung sind Temperaturen über 100°C, beispielsweise über 110°C bevorzugt.

Die erfindungsgemäßen Überzugsmittel-Systeme können als Einkomponenten- und Zweikomponenten-Systeme formuliert werden.

Mit den erfindungsgemäßen Überzugsmitteln ist es möglich ein Substrat zu beschichten mit einem Mehrschichtüberzug durch Aufbringen mindestens einer Grundierungsschicht, bevorzugt auf Basis eines wasserverdünnbaren Überzugsmittels, Aufbringen einer farbgebenden Basislackschicht mit einem erfindungsgemäßen Überzugsmittel, gegebenenfalls Trocknen der Basisschicht und Aufbringen eines transparenten Überzugsmittels als Deckschicht und anschließende Erhitzung des beschichteten Substrats. Es können zu dieser Mehrschichtlackierung gegebenenfalls weitere zusätzliche Schichten hinzugefügt werden.

Die erfindungsgemäß hergestellte Mehrschichtlackierung weist eine gute Oberfläche auf. Die Haftung zwischen den Schichten und der Basislackschicht ist gut und zeigt auch bei Belastung im Feuchtraumklime keine Enthaftungsstörungen. Die Erfindung eignet sich besonders zur Verwendung in der Automobillackierung (Serien- und Reparaturlackierung).

Als Substrate sind Metall- und Kunststoffsubstrate geeignet. Besonders sind die in der Automobilindustrie bekannten Substrate geeignet, z.B. Eisen, Zink, Aluminium, Magnesium oder Legierungen davon, sowie Polyurethane, Polycarbonate oder Polyolefine. Diese können gegebenenfalls mit Grundierungen beschichtet sein. Die erfindungsgemäßen Überzugsmittel sind jedoch auch hervorragend geeignet zur Lackierung anderer Substrate, insbesondere mineralischer Substrate, wie Beton, Holz, sowie zur Beschichtung von Folien (Kunststoff- und Papierfolien) und zum Herstellen dünner Schichten zum Verkleben von mehreren Substraten.

Die erfindungsgemäßen Überzugsmittel zeichnen sich durch eine gute Lagerstabilität aus. Die Wasserverdünnbarkeit der Dispersion ist unproblematisch; der Bedarf an Colösemitteln ist gering. die erfindungsgemäß formulierten Überzugsmittel weisen bei der Spritzapplikation ein vorzügliches Zerstäubungsverhalten auf. Bei der Herstellung von Mehrschichtaufbauten ergibt sich eine sehr gute Zwischenhaftung. Bei der Formulierung von Metalliclacken erzielt man gute Metalliceffekte.

Im folgenden wird die Erfindung anhand von Ausführungsbeispielen näher erläutert.

### Polyurethandispersion 1:

518 g eines Polyesters aus Hexandiol, Neopentylglykol, Adipinsäure und Isophthalsäure mit einer Hydroxylzahl von 130 und einer Säurezahl unter 3 und 54 g Dimethylolpropionsäure werden 1 h bei 100°C in Vakuum getrocknet. Danach wird auf 80°C gekühlt und 178 g Isophorondiisocyanat so zugegeben, daß die Reaktionstemperatur 85°C nicht überschreitet. Die Reaktionsmischung wird so lange bei dieser Temperatur gehalten, bis keine freien NCO-Gruppen mehr nachgewiesen werden können. Ist dieser Zustand erreicht, wird mit der Zugabe von 75 g Acetessigester begonnen. Nach beendeter Zugabe wird die Temperatur innerhalb von 1 h auf 140°C gesteigert und bei dieser Temperatur gehalten bis kein Destillat mehr übergeht. Um die Reste an abgespaltenem Alkohol und nicht umgesetzten Acetessigester zu entfernen, wird kurz Vakuum angelegt. Um das acetessigesterfunktionalisierte Polyurethan in Wasser zu dispergieren, werden zunächst 20,2 g Triethylamin zugesetzt und gut untergerührt und anschließend mit 1221 g vollentsalztem Wasser eine stabile Dispersion mit einem Festkörper von 40 Gew.-% hergestellt. Zur Kettenverlängerung werden 17 g Formaldehydlösung (37 Gew.-%) zugesetzt und 2 h nachgerührt.

| | | |
|---|---|---|
| Analytische Kenndaten | Säurezahl (mg KOH/g | 29 |
| | pH-Wert | 7,2 |
| | Einbrennrückstand (30 min 150°C) | 39,6 Gew.-% |

### Polyurethandispersion 2:

641 g eines handelsüblichen Caprolactondiols mit der Hydroxylzahl 112 und 48,2 g Dimethylolpropionsäure werden 1 h bei 110°C im Vakuum entwässert. Es wird auf 80°C gekühlt und 177,6 g Isophorondiisocyanat so zugegeben, daß eine Temperatur von 85°C nicht überschritten wird. Die Reaktionsmischung wird so lange bei dieser Temperatur gehalten, bis kein freies Isocyanat mehr nachgewiesen werden kann. Die Reaktionsmischung wird auf 100°C erwärmt und 76 g t-Butyl-acetessigester zugetropft. Die Temperatur wird innerhalb von 1,5 h auf 150°C erhöht und so lange gehalten, bis kein Destillat mehr übergeht. Um die Reste an t-Butanol und unumgesetzten Edukt zu entfernen, wird Vakuum angelegt.

Um die Dispergierung des Harzes zu ermöglichen, wird mit 19,2 g Methyldiethanolamin neutralisiert. Mit 1383 g vollentsalztem Wasser wird eine feinteilige stabile Dispersion mit einem Festkörper von 40 Gew.-% hergestellt. Zur Kettenverlängerung werden 41 g einer 25 Gew.-%igen Lösung von Glutaraldehyd in Wasser zugesetzt und 2 h gerührt.

| | | |
|---|---|---|
| Analytische Kenndaten | Säurezahl (mg KOH/g | 25 |
| | pH-Wert | 7,1 |
| | Einbrennrückstand (30 min 150°C) | 39,8 Gew.-% |

### Polyurethandispersion 2a:

Es wird gearbeitet wie unter 2 beschrieben, wobei aber als Polyolkomponente ein handelsübliches Polycarbonatdiol mit einer Hydroxylzahl von 112 verwendet wird.

| | | |
|---|---|---|
| Analytische Kenndaten | Säurezahl (mg KOH/g | 25 |
| | pH-Wert | 7,1 |
| | Einbrennrückstand (30 min 150°C) | 39,7 Gew.-% |

### Polyurethandispersion 3:

748 g eines Polyesters aus Diethylenglykol, Hexandiol, Adipinsäure und Isophthalsäure mit einer Hydroxylzahl von 60 und einer Säurezahl unter 3 werden zusammen mit 80,4 g Dimethylolpropionsäure bei 100°C eine Stunde entwässer. Es wird auf 80°C gekühlt und 209 g Bis-(4-isocyanatocyclohexyl)-methan so zugegeben, daß eine Temperatur von 85°C nicht überschritten wird. Die Reaktionstemperatur wird so lange gehalten bis keine Isocyanatgruppen mehr nachgewiesen werden können. Zur Funktionalisierung werden der Reaktionsmischung 88 g t-Butylacetessigester zugesetzt und wie bei 2 beschrieben verfahren.

Zur Überführung des so hergestellten Harzes werden 1619 g vollentsalztes Wasser mit 34 g Methyldiethanolamin vorgelegt und das Harz unter gutem Rühren hinzugefügt. Es entsteht eine feinteilige Dispersion mit einem Festkörper von 40 Gew-%.

| | | |
|---|---|---|
| Analytische Kenndaten | Säurezahl (mg KOH/g) | 35 |
| | pH-Wert | 7,2 |
| | Einbrennrückstand (30 min 150°C) | 40,1 Gew.-% |

### Polyurethandispersion 4:

Die Darstellung der Harzstufe verläuft wie bei 3 beschrieben, jedoch erfolgt die Überführung in die Dispersion mit Hilfe eines Rotor/Stator-Mischers.

### Polyurethandispersion 5:

489 g eines Polyesters aus Neopentylglykol, Pentandiol und Adipinsäure, mit einer Hydroxylzahl von 90, werden zusammen mit 75 g Dimethylolpropionsäure bei 100°C eine Stunde getrocknet. Anschließend werden bei 80°C 178 g Isophorondiisocyanat so zugegeben, daß die Temperatur von 85°C nicht überschritten wird. Die Reaktionsmischung wird so lange auf 85°C gehalten, bis kein freies Isocyanat mehr nachgewiesen werden kann. Danach wird wie bei 1 eine Funktionalisierung mit 51,6 g Acetessigester durchgeführt.

Zur Überführung in die wäßrige Dispersion werden zunächst 22,6 g Triethylamin zugesetzt, gut untergerührt und dann 1194 g vollentsalztes Wasser zudosiert. Es entsteht eine feinteilige Polyurethandispersion mit einem Festkörper von 40 Gew.-%.

Zur Kettenverlängerung werden 16 g Glyoxal (30 Gew.-% in Wasser) hinzugefügt und 2 Stunden nachgerührt.

| | | |
|---|---|---|
| Analytische Kenndaten | Säurezahl (mg KOH/g) | 40 |
| | pH-Wert | 7,3 |
| | Einbrennrückstand (30 min 150°C) | 39,5 Gew.-% |

### Polyurethandispersion 6:

489 g eines Polyesters aus Neopentylglykol, Pentandiol und Adipinsäure (mit einer Hydroxylzahl von 90) werden zusammen mit 75 g Dimethylolpropionsäure bei 100°C eine Stunde getrocknet. Anschließend werden bei 80°C 178 g Isophorondiisocyanat so zugegeben, daß eine Temperatur von 85°C nicht überschritten wird. Die Reaktionsmischung wird so lange auf 85°C gehalten, bis keine freien Isocyanatgruppen mehr nachgewiesen werden können. Danach wird die Funktionalisierung mit 45 g Cyanessigester durchgeführt. Es werden 45 g Cyanessigester bei 80°C zugesetzt und die Temperatur innerhalb von 2 h auf 160°C gesteigert. Diese Temperatur wird gehalten bis die Reaktion zum Stillstand kommt. Um Reste an nicht umgesetztem Edukt und Ethanol zu entfernen, wird kurzzeitig Vakuum angelegt. Zur Überführung in die wäßrige Dispersion werden zunächst 22,6 g Triethylamin gut eingearbeitet. Danach wird mit vollentsalztem Wasser eine feinteilige wäßrige Dispersion hergestellt.

Zur Kettenverlängerung werden 16 g Glyoxallösung (30 Gew.-% in Wasser) zugegeben und 2 h gerührt.

| | | |
|---|---|---|
| Analytische Kenndaten | Säurezahl (mg KOH/g) | 39 |
| | pH-Wert | 7,4 |
| | Einbrennrückstand (30 min 150°C) | 39,5 Gew.-% |

### Polyurethandispersion 7:

Zunächst wird wie in Beispiel 1 beschrieben aus 518 g Polyester, 54 g Dimethylolpropionsäure ud 178 g Isophorondiisocyanat ein Urethandiol hergestellt, das anschließend mit 75 g Acetessigester funktionalisiert wird.

Vor der Neutralisation mit 20,2 g Triethylamin werden dem Harz 10 g Trimethylpropantriacetoacetat zugesetzt und gut homogenisiert. Danach wird die angegebene Menge Neutralisationsmittel zugegeben und mit 1221 g vollentsalztem Wasser eine stabile feinteilige Dispersion mit einem Festkörper von 40 Gew.-% hergestellt.

Zur Kettenverlängerung werden 19,7 g Formaldehydlösung (37 Gew.-% in Wasser) zugesetzt und 2 h gerührt.

| | | |
|---|---|---|
| Analytische Kenndaten | Säurezahl (mg KOH/g) | 30 |
| | pH-Wert | 7,3 |
| | Einbrennrückstand (30 min 150°C) | 40,2 Gew.-% |

### Polyurethandispersion 8:

In einem Reaktionsgefäß mit Rührer, Innenthermometer, Heizung und Rückflußkühler, werden 250 g eines linearen Polyesters (aufgebaut aus Adipinsäure, Isophthalsäure, Hexandiol; Hydroxylzahl 77, Säurezahl 10) mit 80 g Methylethylketon und 53,3 g N-Methylpyrrolidon auf 70°C erwärmt und bei dieser Temperatur 74 g hydriertes Bisphenol A sowie 28,3 g Dimethylolpropionsäure zugesetzt. Der Ansatz wird auf 120°C erwärmt und eine halbe Stunde bei dieser Temperatur gerührt und im Vakuum entwässert. Anschließend werden bei 70°C 146,7 g Hexamethylendiisocyanat zugegeben. Nach Abklingen der exothermen Reaktion (< 90°C) wird der Ansatz so lange bei 90°C gehalten, bis ein Gehalt an freiem Isocyanat von 1,8 % erreicht ist. Zu diesem Zeitpunkt werden 41 g eines Adduktes aus 1 mol Neopentylglykol und 1 mol Acetessigester zugegeben. Es wird so lange bei 90°C gerührt, bis keine freien Isocyanatgruppen mehr nachgewiesen werden können.

Anschließend wird bei 60°C mit 18,1 g Triethylamin neutralisiert und mit 1242 g vollentsalztem Wasser eine feinteilige Polyurethandispersion mit einem Festkörper von 30 Gew.-% hergestellt. Diese Dispersion wird mit 8,5 g Glyoxal (30 Gew.-% Lösung in Wasser) kettenverlängert, in dem die Reaktionsmischung 3 Std. bei Raumtemperatur gerührt wird.

| | | |
|---|---|---|
| Analytische Kenndaten | Säurezahl (mg KOH/g) | 24 |
| | pH-Wert | 7,3 |
| | Einbrennrückstand (30 min 150°C) | 29,6 Gew.-% |

### Anwendungsbeispiel:

Auf der Basis der beschriebenen Polyurethandispersionen 1 bis 8 sind beispielsweise Wasserbasislacke formuliert worden.

Die Basislacke werden als Vorprüfung für die Automobilserienlackierung auf Prüfbleche lackiert, die folgendermaßen vorbehandelt sind:
1. Entfettung
2. Vorbehandlung (z.B. Phosphatierung)
3. Aufbringen einer Korrosionsschutzschicht mit einem handelsüblichen kathodischen Elektrotauchlack und anschließende Wärmetrocknung
4. Beschichtung mit einem handelsüblichen Automobilserienfüller und anschließender Trocknung.

Die Basislackschicht (10 bis 15 um Trockenfilmdicke) wird nach 10 Minuten Ablüften bei Raumtemperatur, 6 Minuten bei 80°C Umluftofen vorgetrocknet. Anschließend wird mit verschiedenen Klarlacken (30 bis 50 µm Trockenfilmdicke) überlackiert und die komplette Decklackschicht, bestehend aus Basis- und Klarlack, gemeinsam bei 130°C im Umluftofen getrocknet. Bei den Klarlacken handelt es sich zum einen um handelsübliche Einkomponenten-Polyester bzw. Polyacrylat/Melaminharzsysteme und zum anderen um handelsübliche Zweikomponenten-Isocyanat-Formulierungen.

Die erfindungsgemäßen Basislacke zeichen sich durch folgende günstige Applikationseigenschaften aus:
unproblematische Wasserverdünnbarkeit, geringer Colösemittelbedarf, vorzügliches Zerstäubungsverhalten bei der Applikation mit der Spritzbecherpistole und hervorragenden Metallic-Effekt.

Die erfindungsgemäßen Überzugsmittel sind auch für Kunststoff- und Autoreparaturaufbauten, unter Berücksichtigung der speziellen Substrate und Applikationsbedingungen, eingesetzt worden. Es konnte mit den gleichen Vorzügen, wie oben beschrieben, lackiert werden.

## Patentansprüche

1. Wäßriges, selbsttrocknendes oder fremdvernetzendes Überzugsmittel, welches enthält:
I) 40 bis 100 Gew.-% eines Filmbildners in der Form einer wäßrigen Dispersion von einem oder mehreren Polyurethanharzen mit einem Zahlenmittel der Molmasse (Mn) von 2500 bis 1000000, mit mindestens einer CH-aciden Gruppe pro Molekül und einer OH-Zahl von 0 bis 100 und einem Gehalt von 5 bis 200 mEqu pro 100 g Festharz an ionischen und/oder in ionische Gruppen überführbare Gruppen, ausgewählt aus Carboxyl-, Phosphorsäure-, Sulfonsäuregruppen, sowie primäre, sekundäre und tertiäre Aminogruppen, quartäre Ammonium-, Phosphonium- und/oder tertiäre Sulfoniumgruppen, wobei die CH-aciden Gruppen zur Kettenverlängerung ganz oder teilweise mit einer oder mehreren Verbindungen, die mit mindestens zwei CH-aciden Gruppen reagieren können, umgesetzt sein können und wobei die Dispersion des Polyurethanharzes erhältlich ist durch Umsetzung von:
A) mindestens einem Hydroxylgruppen enthaltenden Polyurethanharz (Komponente A), das Harnstoffgruppierungen enthalten kann, mit mindestens einer ionischen Gruppe und/oder zur Ionenbildung befähigten Gruppe pro Molekül, ausgewählt aus obiger Gruppe, und einer OH-Zahl von 10 bis 150, in wasserfreiem Milieu, mit
B) mindestens einer Verbindung (Komponente B), die mindestens eine zur Reaktion mit zumindest einem Teil der OH-Gruppen des Polyurethanharzes geeignete funktionelle Gruppe aufweist und darüber hinaus eine CH-acide Gruppe enthält, oder bei der Umsetzung mit der Komponente A) ergibt, und
C) gänzliche oder teilweise Überführung von in dem erhaltenen Produkt vorhandenen, zur Ionenbildung befähigten Gruppen, in die ionisierte Form, und Überführung des erhaltenen Produktes in die wäßrige Phase, und
II) 60 bis 0 Gew.-% eines oder mehrerer Vernetzer auf der Basis von Verbindungen, die mit mindestens zwei CH-aciden Gruppen reagieren können, auf der Basis von Formaldehyd-Kondensationsharzen und/oder Polyisocyanaten mit freien oder blockierten Isocyanatgruppen
wobei die Verbindungen der Komponente I) und/oder II), die mit mindestens zwei CH-aciden Gruppen reagieren können, Aldehyde mit einer oder mehreren Aldehydfunktionen und/oder freie oder blockierte Polyisocyanate mit im Durchschnitt mindestens 1,5 Isocyanatfunktionen im Molekül sind, und
wobei sich die Gew.-% von I) und II) auf den Harzfestkörpergehalt beziehen und auf 100 Gew.-% addieren,
sowie Pigmente und gegebenenfalls Füllstoffe, organische Lösemittel und/oder lackübliche Additive.

2. Wäßriges, selbsttrocknendes oder fremdvernetzendes Überzugsmittel, enthaltend
I) 40 bis 100 Gew.-% eines Filmbildners in der Form einer wäßrigen Dispersion von einem oder mehreren Polyurethanharzen mit einem Zahlenmittel der Molmasse (Mn) von 2500 bis 1000000, mit mindestens einer CH-aciden Gruppe pro Molekül und einer OH-Zahl von 0 bis 100 und einem Gehalt von 5 bis 200 mEqu pro 100 g Festharz an ionischen und/oder in ionische Gruppen überführbare Gruppen, ausgewählt aus Carboxyl-, Phosphorsäure-, Sulfonsäuregruppen, sowie primäre, sekundäre und tertiäre Aminogruppen, quartäre Ammonium-, Phosphonium- und/oder tertiäre Sulfoniumgruppen, wobei die CH-aciden Gruppen zur Kettenverlängerung ganz oder teilweise mit einer oder mehreren Verbindungen, die mit mindestens zwei CH-aciden Gruppen reagieren können, umgesetzt sind und
II) 60 bis 0 Gew.-% eines oder mehrerer Vernetzer auf der Basis von Verbindungen, die mit mindestens zwei CH-aciden Gruppen reagieren können, auf der Basis von Formaldehyd-Kondensationsharzen und/oder Polyisocyanaten mit freien oder blockierten Isocyanatgruppen
wobei die Verbindungen der Komponente I) und/oder II), die mit mindestens zwei CH-aciden Gruppen reagieren können, Aldehyde mit einer oder mehreren Aldehydfunktionen und/oder freie oder blockierte Polyisocyanate mit im Durchschnitt mindestens 1,5 Isocyanatfunktionen im Molekül sind, und
wobei sich die Gew.-% von I) und II) auf den Harzfestkörpergehalt beziehen und auf 100 Gew.-% addieren,
sowie Pigmente und gegebenenfalls Füllstoffe, organische Lösemittel und/oder lackübliche Additive.

3. Wäßriges Überzugsmittel nach Anspruch 1 oder 2, worin der Aldehyd, Formaldehyd und/oder Glyoxal ist und das Polyisocyanat ein Diisocyanat ist.

4. Wäßriges Überzugsmittel nach einem der vorhergehenden Ansprüche, worin das Polyurethanharz über die CH-aciden Gruppen kettenverlängert ist und ein Zahlenmittel der Molmasse (Mn) von 20000 bis 1000000 aufweist.

5. Wäßriges Überzugsmittel nach einem der Ansprüche 1 oder 3, worin das Polyurethanharz nicht über die CH-aciden Gruppen kettenverlängert ist und ein Zahlenmittel der Molmasse (Mn) von 5000 bis 500000 aufweist.

6. Wäßriges Überzugsmittel nach einem der vorhergehenden Ansprüche, das in Komponente I) ein oder mehrere wasserverdünnbare Polyesterharze, wasserverdünnbare Polyacrylatharze oder andersartige wasserverdünnbare Polyurethanharze als zusätzliche Bindemittel in einem Anteil von bis zu 95 Gew.-% des in Komponente I) enthaltenden Harzfestkörpers enthält.

7. Verfahren zur Herstellung einer als Komponente I) gemäß Anspruch 2 geeigneten wäßrigen Dispersion von Polyurethanharzen, mit einem Zahlenmittel der Molmasse (Mn) von 2500 bis 1000000, einer OH-Zahl von 0 bis 100 und einem Gehalt von 5 bis 200 mEqu pro 100 g Festharz an ionischen und/oder in ionische Gruppen überführbare Gruppen, ausgewählt aus Carboxyl-, Phosphorsäure-, Sulfonsäuregruppen, sowie primäre, sekundäre und tertiäre Aminogruppen, quartäre Ammonium-, Phosphonium- und/oder tertiäre Sulfoniumgruppen, dadurch gekennzeichnet, daß man
- ein oder mehrere in Wasser dispergierbare Polyurethanharze mit ionischen, und/oder in ionische Gruppen überführbare Gruppen, die mindestens eine CH-acide Gruppe pro Molekül enthalten und ein Zahlenmittel der Molmasse (Mn) von 2500 bis 500000 aufweisen,
- in wäßrigem oder nicht-wäßrigem Medium zur Kettenverlängerung mit
- einer oder mehreren Verbindungen, die mit mindestens zwei CH-aciden Gruppen reagieren können, wobei es sich um Mono- oder Polyaldehyde und/oder Di- und Polyisocyanate mit mindestens 1,5 Isocyanatfunktionen im Molekül handelt, umgesetzt und
- gegebenenfalls ein in nicht-wäßrigem Medium erhaltenes Reaktionsprodukt in die wäßrige Phase überführt wird.

8. Verfahren nach Anspruch 7, dadurch gekennzeichnet, daß als Verbindungen, die mit mindestens zwei CH-aciden Gruppen reagieren können Formaldehyd, Glyoxal und/oder Diisocyanate, verwendet werden.

9. Verfahren zur Mehrschichtlackierung eines Substrats durch Auftrag einer Basislackschicht und Überlackierung mit einem Klarlack, dadurch gekennzeichnet, daß man zur Herstellung der Basislackschicht ein wäßriges, selbsttrocknendes oder fremdvernetzendes Überzugsmittel nach den Ansprüchen 1 bis 6 verwendet.

10. Verwendung der Überzugsmittel nach einem der Ansprüche 1 bis 6 bei der Herstellung von Mehrschichtlackierungen.

## Claims

1. Aqueous, self-drying or extrinsically crosslinking coating composition which contains:
I) 40 to 100 wt.% of a film former in the form of an aqueous dispersion of one or more polyurethane resins having a number average molecular weight (Mn) of 2500 to 1000000, having at least one CH-acidic group per molecule and an OH value of 0 to 100 and a content of 5 to 200 mEq per 100 g of solid resin of ionic groups and/or groups convertible into ionic groups, selected from carboxyl, phosphoric acid, sulfonic acid groups, together with primary, secondary and tertiary amino groups, quaternary ammonium, phosphonium and/or tertiary sulfonium groups, wherein the CH-acidic groups may be reacted for the purposes of chain extension entirely or in part with one or more compounds capable of reacting with at least two CH-acidic groups, and wherein the dispersion of the polyurethane resin is obtainable by reacting:
A) at least one polyurethane resin containing hydroxyl groups (component A), which may contain urea groups, having at least one ionic group and/or group capable of ion formation per molecule, selected from the above group, and an OH value of 10 to 150, in an anhydrous environment, with
B) at least one compound (component B) which has at least one functional group suitable for reacting with at least a proportion of the OH groups of the polyurethane resin and moreover contains a CH-acidic group, or yields one on reaction with component A), and
C) complete or partial conversion of the groups capable of ion formation present in the resultant product into the ionised form, and conversion of the resultant product into the aqueous phase, and
II) 60 to 0 wt. of one or more crosslinking agents based on compounds capable of reacting with at least two CH-acidic groups, based on formaldehyde condensation resins and/or polyisocyanates having free or blocked isocyanate groups
wherein the compounds of component I) and/or II) capable of reacting with at least two CH-acidic groups are aldehydes having one or more aldehyde functions and/or are free or blocked polyisocyanates having on average at least 1.5 isocyanate functions per molecule and
wherein the weight percentages of I) and II) relate to the resin solids content and add up to 100 wt.%,
together with pigments and optionally extenders, organic solvents and/or conventional lacquer additives.

2. Aqueous, self-drying or extrinsically crosslinking coating composition containing
I) 40 to 100 wt.% of a film former in the form of an aqueous dispersion of one or more polyurethane resins having a number average molecular weight (Mn) of 2500 to 1000000, having at least one CH-acidic group per molecule and an OH value of 0 to 100 and a content of 5 to 200 mEq per 100 g of solid resin of ionic groups and/or groups convertible into ionic groups, selected from carboxyl, phosphoric acid, sulfonic acid groups, together with primary, secondary and tertiary amino groups, quaternary ammonium, phosphonium and/or tertiary sulfonium groups, wherein the CH-acidic groups may be reacted for the purposes of chain extension entirely or in part with one or more compounds capable of reacting with at least two CH-acidic groups, and
II) 60 to 0 wt. of one or more crosslinking agents based on compounds capable of reacting with at least two CH-acidic groups, based on formaldehyde condensation resins and/or polyisocyanates having free or blocked isocyanate groups
wherein the compounds of component I) and/or II) capable of reacting with at least two CH-acidic groups are aldehydes having one or more aldehyde functions and/or are free or blocked polyisocyanates having on average at least 1.5 isocyanate functions per molecule and
wherein the weight percentages of I) and II) relate to the resin solids content and add up to 100 wt.%,
together with pigments and optionally extenders, organic solvents and/or conventional lacquer additives.

3. Aqueous coating composition according to claim 1 or 2, in which the aldehyde is formaldehyde and/or glyoxal and the polyisocyanate is a diisocyanate.

4. Aqueous coating composition according to one of the preceding claims, in which the polyurethane resin is chain-extended by means of the CH-acidic groups and has a number average molecular weight (Mn) of 20000 to 1000000.

5. Aqueous coating composition according to one of claims 1 to 3, in which the polyurethane resin is not chain-extended by means of the CH-acidic groups and has a number average molecular weight (Mn) of 5000 to 500000.

6. Aqueous coating composition according to one of the preceding claims which contains in component I) one or more water-dilutable polyester resins, water-dilutable polyacrylate resins or other water-dilutable polyurethane resins as additional binders in a proportion of up to 95 wt.% of the resin solids contained in component I).

7. Process for the production of an aqueous dispersion of polyurethane resins suitable as component I) according to claim 2 having a number average molecular weight (Mn) of 2500 to 1000000, an OH value of 0 to 100 and a content of 5 to 200 mEq per 100 g of solid resin of ionic groups and/or groups convertible into ionic groups, selected from carboxyl, phosphoric acid, sulfonic acid groups, together with primary, secondary and tertiary amino groups, quaternary ammonium, phosphonium and/or tertiary sulfonium groups, characterised in that
- one or more polyurethane resins dispersible in water having ionic groups and/or groups convertible into ionic groups, which contain at least one CH-acidic group per molecule and have a number average molecular weight (Mn) of 2500 to 500000,
- is reacted for the purposes of chain extension in an aqueous or non-aqueous medium with
- one or more compounds capable of reacting with at least two CH-acidic groups, wherein these compounds comprise mono- or polyaldehydes and/or di- and polyisocyanates having at least 1.5 isocyanate functions per molecule, and
- a reaction product obtained in a non-aqueous medium is optionally converted into the aqueous phase.

8. Process according to claim 7, characterised in that formaldehyde, glyoxal and/or diisocyanates are used as the compounds capable of reacting with at least two CH-acidic groups.

9. Process for multi-layer lacquer coating a substrate by applying a base lacquer layer and overcoating with a clear lacquer, characterised in that an aqueous, self-drying or extrinsically crosslinking coating composition according to claims 1 to 6 is used to produce the base lacquer layer.

10. Use of the coating compositions according to one of claims 1 to 6 in the production of multi-layer lacquer coatings.

## Revendications

1. Produit de revêtement aqueux, siccatif ou réticulant sous l'action d'un agent étranger, qui contient
I) 40 à 100 % en poids d'un produit filmogène sous la forme d'une dispersion aqueuse d'une ou plusieurs résines de polyuréthannes ayant une masse moléculaire moyenne, moyenne en nombre, Mn, de 2500 à 1 000 000, avec au moins un groupe à CH acide par molécule, un indice d'OH de 0 à 100 et une teneur de 5 à 200 méq., pour 100 g de résines solides, en groupes ioniques et/ou en groupes convertibles en groupes ioniques, choisis parmi les groupes carboxyle, acide phosphorique, acide sulfonique ou les groupes amino primaires, secondaires et tertiaires, ammonium quaternaire, phosphonium et/ou sulfonium tertiaire, les groupes à CH acide pouvant réagir en totalité ou en partie pour l'allongement des chaînes avec un ou plusieurs composés qui sont capables de réagir avec au moins deux groupes à CH acide, la dispersion de résine de polyuréthanne étant obtenue par la réaction de :
A) au moins une résine de polyuréthanne contenant des groupes hydroxy (composant A) qui peut contenir des groupements urée, et qui contient au moins un groupe ionique et/ou un groupe capable de former des ions par molécule, choisi parmi ceux mentionnés ci-dessus, avec un indice d'OH de 10 à 50, en milieu anhydre, avec
B) au moins un composé (composant B) qui contient au moins un groupe fonctionnel apte à réagir avec une partie des groupes OH de la résine de polyuréthanne et contient en outre un groupe à CH acide ou en un lors de la réaction avec le composant A) et
C) conversion totale ou partielle des groupes capables de former des ions qui existent dans le produit obtenu en la forme ionisée et transfert du produit obtenu en phase aqueuse, et
II) 60 à 0 % en poids d'un ou plusieurs agents réticulants à base de composés capables de réagir avec au moins deux groupes à CH acide, à base de résines de condensation du formaldéhyde et/ou de polyisocyanates à groupes isocyanate libres ou bloqués, les composés du composant I) et/ou du composant II) qui sont capables de réagir avec au moins deux groupes à CH acide consistant en aldéhydes à une ou plusieurs fonctions aldéhyde et/ou polyisocyanates libres ou bloqués avec en moyenne au moins 1,5 fonctions isocyanate par molécule, et
les pourcentages donnés pour I) et II) se rapportant à la teneur en matières solides résineuses et se complétant à 100 % en poids,
ainsi que des pigments et le cas échéant des matières de charge, des solvants organiques et/ou des additifs usuels pour peintures et vernis.

2. Produit de revêtement aqueuse, siccatif ou réticulant sous l'action d'un agent étranger, qui contient
I) 40 à 100 % en poids d'un produit filmogène sous la forme d'une dispersion aqueuse d'une ou plusieurs résines de polyuréthannes ayant une masse moléculaire moyenne, moyenne en nombre, Mn, de 2500 à 1 000 000 avec au moins un groupe à CH acide par molécule et un indice d'OH de 0 à 100 et une teneur de 5 à 200 méq., pour 100 g de résines solides, de groupes ioniques et/ou de groupes convertibles en groupes ioniques, choisis parmi les groupes carboxyle, acide phosphorique, acide sulfonique ou amino primaires, secondaires ou tertiaires, ammonium quaternaire, phosphonium et/ou sulfonium tertiaire, les groupes à CH acide ayant réagi en totalité ou en partie pour l'allongement des chaînes avec un ou plusieurs composés capables de réagir avec au moins deux groupes à CH acide et
II) 60 à 0 % en poids d'un ou plusieurs agents réticulants à base de composés capables de réagir avec au moins deux groupes à CH acide, à base de résines de condensation du formaldéhyde et/ou de polyisocyanates à groupes isocyanate libres ou bloqués, les composés du composant I) et/ou du composant II) qui sont capables de réagir avec au moins deux groupes à CH acide consistant en aldéhydes à une ou plusieurs fonctions aldéhyde et/ou polyisocyanates libres ou bloqués avec en moyenne au moins 1,5 fonctions isocyanate par molécule, et
les pourcentages donnés pour I) et II) se rapportant à la teneur en matières résineuses solides et se complétant à 100 % en poids,
ainsi que des pigments et le cas échéant des matières de charge, des solvants organiques et/ou des additifs usuels pour peintures et vernis.

3. Produit de revêtement aqueux selon revendication 1 ou 2, dans lequel l'aldéhyde consiste en formaldéhyde et/ou glyoxal et le polyisocyanate consiste en diisocyanate.

4. Produit de revêtement aqueux selon une des revendications qui précèdent, dans lequel la résine de polyuréthanne est soumise à l'allongement des chaînes par les groupes à CH acide et a une masse moléculaire moyenne, moyenne en nombre, Mn, de 20 000 à 1 000 000.

5. Produit de revêtement aqueux selon une des revendications 1 ou 3, dans lequel la résine de polyuréthanne n'a pas subi l'allongement des chaînes par les groupes à CH acide et a une masse moléculaire moyenne, moyenne en nombre, Mn, de 5000 à 500 000.

6. Produit de revêtement aqueux selon l'une des revendications qui précèdent, qui contient dans le composant I) une ou plusieurs résines de polyesters diluables à l'eau, une ou plusieurs résines de polyacrylates diluables à l'eau ou des résines de polyuréthannes diluables à l'eau d'un autre type en tant que liants additionnels en proportions allant jusqu'à 95 % en poids des matières solides résineuses contenues dans le composant I).

7. Procédé de préparation d'une dispersion aqueuse de polyuréthannes convenant en tant que composant I) selon revendication 2, à une masse moléculaire moyenne, moyenne en nombre, Mn, de 2500 à 1 000 000, un indice d'OH de 0 à 100 et une teneur de 5 à 200 méq. pour 100 g de résines solides en groupes ioniques et/ou groupes convertibles en groupes ioniques choisis parmi les groupes carboxyle, acide phosphorique, acide sulfonique ou les groupes amino primaires, secondaires et tertiaires, ammonium quaternaire, phosphonium et/ou sulfonium tertiaire, caractérisé en ce que
- on fait réagir une ou plusieurs résines de polyuréthannes dispersables dans l'eau, contenant des groupes ioniques et/ou des groupes convertibles en groupes ioniques, avec au moins un groupe à CH acide par molécule et une masse moléculaire moyenne, moyenne en nombre, Mn, de 2500 à 500 000,
- en milieu aqueux ou non aqueux, pour l'allongement des chaînes, avec
- un ou plusieurs composés capables de réagir avec au moins deux groupes à CH acide, ces composés qui consistent en mono- ou polyaldéhydes et/ou di- et poly-isocyanates à au moins 1,5 fonctions isocyanate dans la molécule et
- le cas échéant on fait passer en phase aqueuse un produit de réaction obtenu en milieu non aqueux.

8. Procédé selon revendication 7, caractérisé en ce que l'on utilise en tant que composés capables de réagir avec au moins deux groupes à CH acide le formaldéhyde, le glyoxal et/ou un diisocyanate.

9. Procédé pour l'application de revêtements à plusieurs couches sur un support, par application d'une couche de peinture de base et, en superposition, d'un vernis clair, caractérisé en ce que, pour l'application de la couche de peinture de base, on utilise un produit de revêtement aqueux, siccatif ou réticulant sous l'action d'un agent étranger, selon les revendications 1 à 6.

10. Utilisation des produits de revêtement selon une des revendications 1 à 6 pour l'application de revêtements à plusieurs couches.
